(19) **Europäisches Patentamt / European Patent Office / Office européen des brevets**

(11) **EP 4 750 190 A1**

(12) **EUROPEAN PATENT APPLICATION**
published in accordance with Art. 153(4) EPC

(43) Date of publication:
27.05.2026 Bulletin 2026/22

(21) Application number: 23945454.9

(22) Date of filing: 19.07.2023

(51) International Patent Classification (IPC):
*H04W 72/0446* (2023.01)

(52) Cooperative Patent Classification (CPC):
H04W 72/0446

(86) International application number:
PCT/CN2023/108187

(87) International publication number:
WO 2025/015562 (23.01.2025 Gazette 2025/04)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(71) Applicant: GUANGDONG OPPO MOBILE TELECOMMUNICATIONS CORP., LTD.
Dongguan, Guangdong 523860 (CN)

(72) Inventors:
• CAO, Jianfei
Dongguan, Guangdong 523860 (CN)
• LIU, Wendong
Dongguan, Guangdong 523860 (CN)
• LIU, Zhe
Dongguan, Guangdong 523860 (CN)

(74) Representative: Penza, Giancarlo
Bugnion S.p.A.
Viale Lancetti, 17
20158 Milano (IT)

(54) **COMMUNICATION METHOD, APPARATUS, AND DEVICE, CHIP, STORAGE MEDIUM, PRODUCT, AND PROGRAM**

(57) The present application discloses a communication method, apparatus, and device, a chip, a storage medium, a product, and a program. The method comprises: a terminal device acquires a measurement result of a first signal, wherein the measurement result is used for determining a timing advance value of a first cell and/or a first spatial filter, and the first signal is a downlink reference signal related to a second cell and/or a second spatial filter.

A terminal device acquires a measurement result for a first signal, where the measurement result is used for determining a timing advance value of a first cell and/or a first spatial filter, and the first signal is a downlink reference signal related to a second cell and/or a second spatial filter — S710

**FIG. 7**

EP 4 750 190 A1

**Description**

TECHNICAL FIELD

Embodiments of the present disclosure relate to the technical field of mobile communications, and more particularly to, communication methods and communication devices, a communication apparatus, a chip, a storage medium, a product, and a program.

BACKGROUND

In the related art, uplink transmissions from different terminal devices in a same cell to a network device may have different delays. In this case, a Timing Advance (TA) value may be used for uplink synchronization between the terminal devices, so that the uplink transmissions from the terminal devices arrive at the network device at almost the same time, so as to ensure that no interference occurs between the terminal devices.

The terminal device may obtain the TA value indicated by the network device by sending a Physical Random Access Channel (PRACH) to the network device, so as to implement the uplink synchronization with other terminal devices in the same cell. However, the aforementioned process for obtaining the TA value needs to occupy a certain amount of uplink resources and needs time overheads.

SUMMARY

Embodiments of the present disclosure provide communication methods and communication devices, a communication apparatus, a chip, a storage medium, a product, and a program.

In a first aspect, an embodiment of the present disclosure provides a communication method including following operation.

A terminal device acquires a measurement result for a first signal, where the measurement result is used for determining a timing advance value of a first cell and/or a first spatial filter, and the first signal is a downlink reference signal related to a second cell and/or a second spatial filter.

In a second aspect, an embodiment of the present disclosure provides a communication method including following operation.

A network device receives a measurement result for a first signal from a terminal device, where the measurement result is used for determining a timing advance value of a first cell and/or a first spatial filter, and the first signal is a downlink reference signal related to a second cell and/or a second spatial filter.

In a third aspect, an embodiment of the present disclosure provides a communication method including following operation.

A network device receives capability information of a terminal device, where the capability information of the terminal device represents that the terminal device supports acquiring a measurement result for a first signal, and/or supports determining a timing advance value of a first cell and/or a first spatial filter based on the measurement result, the first signal being a downlink reference signal related to a second cell and/or a second spatial filter.

In a fourth aspect, an embodiment of the present disclosure provides a communication device including a first processing unit.

The first processing unit is configured to acquire a measurement result for a first signal, where the measurement result is used for determining a timing advance value of a first cell and/or a first spatial filter, and the first signal is a downlink reference signal related to a second cell and/or a second spatial filter.

In a fifth aspect, an embodiment of the present disclosure provides a communication device including a second receiving unit.

The second receiving unit is configured to receive a measurement result for a first signal from a terminal device, where the measurement result is used for determining a timing advance value of a first cell and/or a first spatial filter, and the first signal is a downlink reference signal related to a second cell and/or a second spatial filter.

In a sixth aspect, an embodiment of the present disclosure provides a communication device including a third receiving unit.

The third receiving unit is configured to receive capability information of a terminal device, where the capability information of the terminal device represents that the terminal device supports acquiring a measurement result for a first signal, and/or supports determining a timing advance value of a first cell and/or a first spatial filter based on the measurement result, the first signal being a downlink reference signal related to a second cell and/or a second spatial filter.

In a seventh aspect, an embodiment of the present disclosure provides a communication apparatus including a processor and a memory. The memory is configured to store a computer program, and the processor is configured to invoke and execute the computer program stored in the memory to perform the communication method in any one of the first aspect to the third aspect.

In an eighth aspect, an embodiment of the present disclosure provides a chip configured to implement the communication method of any one of the first aspect to the third aspect.

Specifically, the chip includes a processor configured to invoke and execute a computer program from a memory, to cause a device on which the chip is mounted to perform the communication method of any one of the first aspect to the third aspect.

In a ninth aspect, an embodiment of the present disclosure provides a computer-readable storage medium having stored thereon a computer program that, when executed by at least one processor, implements the communication method of any one of the first aspect to the third aspect.

In a tenth aspect, an embodiment of the present disclosure provides a computer program product including computer program instructions, where the computer program instructions cause a computer to perform the communication method of any one of the first aspect to the third aspect.

In an eleventh aspect, an embodiment of the present disclosure provides a computer program, where when the computer program is executed on a computer, the computer is caused to perform the communication method of any one of the first aspect to the third aspect.

Embodiments of the present disclosure provide communication methods and communication devices, a communication apparatus, a chip, a storage medium, a product, and a program. The method includes following operation. A terminal device acquires a measurement result for a first signal, where the measurement result for the first signal is used for determining a timing advance value of a first cell and/or a first spatial filter, and the first signal is a downlink reference signal related to a second cell and/or a second spatial filter. In this way, after obtaining the measurement result for the first signal, the terminal device may subsequently obtain the timing advance value of the first cell and/or the first spatial filter based on the measurement result, so that the terminal device is able to obtain the timing advance value without sending the PRACH to the network device, thereby saving time-frequency resources and time overheads.

BRIEF DESCRIPTION OF THE DRAWINGS

The accompanying drawings, which are illustrated herein, provide further understanding of the present disclosure and constitute a part of the present disclosure. The exemplary embodiments of the present disclosure and description thereof are intended to be illustrative of the present disclosure and do not constitute an undue limitation of the present disclosure. In the accompanying drawings:

FIG. 1 illustrates a first schematic diagram of an adjustment format of a timing advance value;
FIG. 2 illustrates a second schematic diagram of an adjustment format of a timing advance value;
FIG. 3 illustrates a schematic diagram of signaling indicating a timing advance value;
FIG. 4 illustrates a schematic diagram of a reference point for a timing advance value;
FIG. 5 illustrates a schematic structural diagram of neurons;
FIG. 6 illustrates a schematic diagram of a neural network;
FIG. 7 illustrates a first flowchart of a communication method according to an embodiment of the present disclosure;
FIG. 8 is a first schematic diagram of a scenario where a terminal device acquires a measurement result for a first signal;
FIG. 9 is a second schematic diagram of a scenario where a terminal device acquires a measurement result for a first signal;
FIG. 10 illustrates a second flowchart of a communication method according to an embodiment of the present disclosure;
FIG. 11 illustrates a first schematic diagram of a neural network model;
FIG. 12 illustrates a second schematic diagram of a neural network model;
FIG. 13 illustrates a third schematic diagram of a neural network model;
FIG. 14 illustrates a fourth schematic diagram of a neural network model;
FIG. 15 illustrates a third flowchart of a communication method according to an embodiment of the present disclosure;
FIG. 16 illustrates a third schematic diagram of an adjustment format of a timing advance value;
FIG. 17 illustrates a fourth schematic diagram of an adjustment format of a timing advance value;
FIG. 18 illustrates a fifth schematic diagram of an adjustment format of a timing advance value;
FIG. 19 illustrates a sixth schematic diagram of an adjustment format of a timing advance value;
FIG. 20 is a first schematic diagram of a composition structure of a communication device according to an embodiment of the present disclosure;
FIG. 21 is a second schematic diagram of a composition structure of a communication device according to an embodiment of the present disclosure;
FIG. 22 is a third schematic diagram of a composition structure of a communication device according to an embodiment of the present disclosure;

FIG. 23 is a schematic structural diagram of a communication apparatus according to an embodiment of the present disclosure;

FIG. 24 is a schematic structural diagram of a chip according to an embodiment of the present disclosure; and

FIG. 25 is a schematic block diagram of a communication system according to an embodiment of the present disclosure.

DETAILED DESCRIPTION

The technical schemes of the embodiments of the present disclosure would be described in conjunction with the accompanying drawings in the embodiments of the present disclosure. It is apparent that the described embodiments are only part of the embodiments of the present disclosure, not all the embodiments. Based on the embodiments in the present disclosure, all other embodiments obtained by those of ordinary skill in the art without creative work shall fall within the scope of protection of the present disclosure.

Unless otherwise defined, all technical and scientific terms used herein have the same meaning as commonly understood by those skilled in the technical field of the present disclosure. The terms used herein is only for the purpose of describing the present disclosure, and is not intended to limit the present disclosure.

In the following description, "some embodiments" are referred to, which describe a subset of all possible embodiments, but it is understood that "some embodiments" may be the same subset or different subsets of all possible embodiments, and may be composited with each other without conflict.

It is to be noted that the term "first\ second\ third" involved in embodiments of the present disclosure is used for distinguishing similar objects and not representing a specific sequence or sequential order. It is to be understood that "first \second\third" may be interchangeable under an appropriate circumstance, so that the embodiments of the present disclosure described herein are, for example, capable of being implemented in a sequence other than those illustrated or described herein.

In addition, in the embodiments of the present disclosure, the term "and/or" is only an association relationship describing associated objects and represents that three relationships may exist. For example, A and/or B may represent three conditions: i.e., independent existence of A, existence of both A and B and independent existence of B. In addition, the character "/" in the present disclosure generally indicates that the relationship between the related objects is "or".

It is to be understood that the term "indication" mentioned in the embodiments of the present disclosure may be a direct indication, may be an indirect indication, or may be indicative of an association. For example, A indicates B, which may mean that A directly indicates B, for example, B may be obtained through A; it may also mean that A indirectly indicates B, for example, A indicates C, and B may be obtained by C; and it may also indicate that there is an association between A and B.

It is to be understood that the term "predefined", "agreed in a protocol", "predetermined", or "predefined rule" mentioned in the embodiments of the present disclosure may be achieved by pre-storing corresponding codes, tables or other means used for indicating relevant information in devices (e.g., terminal devices), and the specific implementation thereof is not limited in the present disclosure. For example, predefined may refer to what is defined in the protocol. It is further to be understood that in the embodiments of the present disclosure, the "protocol" may be a standard protocol in the communication field. For example, the protocol may include a Long Term Evolution (LTE) protocol, a New Radio (NR) protocol, and related protocols applied in future communication systems, which are not limited in the present disclosure.

The technical solutions described in the embodiments of the present disclosure can be arbitrarily combined without conflict. In the description of the present disclosure, "multiple" means two or more, unless expressly specified otherwise.

The technical solutions of the embodiments of the present disclosure may be applied to various communication systems, such as an LTE system, an LTE time division duplex (TDD), a universal mobile telecommunication system (UMTS), an Internet of things (IoT) system, a narrow band Internet of things (NB-IoT) system, an enhanced machine-type communications (eMTC) system, a 5-th generation (5G) communication system (also referred to as a NR communication system), or a future communication system, etc.

In the embodiments of the present disclosure, the terminal device may be a device that provides voice/data to a user. For example, the terminal device may be a handheld device having a wireless connection function, an in-vehicle device, etc. At present, the examples of the terminal device may be: an access terminal, a User Equipment (UE), a mobile phone, a tablet, a laptop, a handheld computer, a Mobile Internet Device (MID), a wearable device, a Virtual Reality (VR) device, an Augmented Reality (AR) device, a wireless terminal in industrial control, a wireless terminal in self-driving, a wireless terminal in a remote medical surgery, a wireless terminal in a smart grid, a wireless terminal in a transportation safety, a wireless terminal in a smart city, a wireless terminal in a smart home, a cellular phone, a cordless phone, a Session Initiation Protocol (SIP) phone, a Wireless Local Loop (WLL) station, a Personal Digital Assistant (PDA), a handheld device having a wireless communication function, a computing device or other processing device connected to a wireless modem, a wearable device, a terminal device in a 5G network, or a terminal device in a future evolved Public Land Mobile Network (PLMN), which is not limited in the embodiments of the present disclosure.

By way of example and not limitation, in the embodiments of the present disclosure, the terminal device may also be a wearable device. The wearable device, also referred to as a wearable intelligent device, is a generic term of wearable devices obtained by performing intelligent design and development on daily wearing products by using the wearable technology, such as glasses, gloves, watches, clothes, and shoes. The wearable device is a portable device that is worn directly on the body or integrated into the user's clothes or accessories. The wearable device is not only a kind of hardware device, but also realizes functions through software support, data interaction and cloud interaction. The generalized wearable smart device has full functions and a large size, and the generalized wearable smart device may realize complete or partial functions without relying on smart phones, such as smart watches or smart glasses, and the generalized wearable smart device only focus on certain application functions and need to be used in conjunction with other devices (such as, smart phones), such as, various smart bracelets and smart jewelry for monitoring physical signs.

In addition, in the embodiment of the present disclosure, the terminal device may also be a terminal device in the IoT system. The IoT is an important part of the future development of information technology, and has main technical characteristics that the articles are connected to the network through communication technology, thereby implementing an intelligent network of human-to-machine interconnection and thing-to-thing interconnection.

It is to be noted that a certain air interface technology (such as the NR technology or the LTE technology, etc.) may also be used for the communication between the terminal device and the Network (NW). A certain air interface technology (such as the NR technology or the LTE technology, etc.) may also be used for the communication between the terminal devices.

It is to be noted that the device configured to implement the functions of the terminal device may be the terminal device, or may be a device capable of supporting the terminal device to implement the functions, for example, a chip system or a chip, and the device may be mounted in the terminal device. In the embodiment of the present disclosure, the chip system may be composed of a chip, or may include a chip and other discrete devices.

In the embodiment of the present disclosure, the network device may be an evolutional node B (eNB or eNodeB) in an LTE system, a next generation radio access network (NG RAN) device, a base station (gNB) in an NR system, or a wireless controller in a cloud radio access network (CRAN). The network device may further be a relay station, an access point, a vehicle-mounted device, a wearable device, a hub, a switch, a network bridge, a router, a network device in the PLMN or the like.

In order to facilitate understanding of the technical solutions of the embodiments of the present disclosure, related technologies of the embodiments of the present disclosure are described below. The following related technologies used as optional solutions may be combined with technical solution of the embodiments of the present disclosure in various ways, and the combinations belong to the scope of protection of the embodiments of the present disclosure.

In the current NR standard, the terminal device may be configured with up to four Timing Advance Groups (TAGs) in one Cell Group (CG). A Radio Resource Control (RRC) configuration of the TAGs may be as follows.

Generally, one CG may include multiple serving cells, and each serving cell may be assigned a TAG Identifier (ID). Each TAG may have a timer (denoted as TimeAlignmentTimer), and the terminal device may perform timing of the timer. When the timer expires, the terminal device may consider that the TAG has uplink synchronization. The network device may adjust a TA value through Media Access Control (MAC) Control Element (CE) signaling or other signaling during the running of the timer, so as to reset the timer, and the terminal device may consider that the TAG is in an uplink synchronization state.

For example, it is assumed that a value of the timer is configured to be 500 ms, if the network device updates (adjusts) the TA value once within 500 ms, the terminal device may consider the uplink synchronization; otherwise, if the network device does not update (adjust) the TA value once within 500 ms, the terminal device may consider the uplink synchronization and may initiate a Random Access Channel (RACH) procedure when uplink data arrives.

The timing advance takes a first path of the terminal device receiving a downlink channel (i.e., the first symbol of a slot where the channel is located) as a downlink reference, so as to enable advanced transmission. The calculation formula of for the TA value is as follows:

$$TA = (N_{TA} + N_{TA,offset}) * T_C \qquad (1).$$

In the formula above, $N_{TA,Offset}$ represents a TA offset pre-configured for each serving cell in a CG, $T_C$ represents the smallest unit of time in the NR system, $T_C = 1 / (4096 * 480kHz)$, and $N_{TA}$ represents adjustment amount of the TA.

The calculation of $N_{TA}$ may have following two manners.

In a first manner of calculating $N_{TA}$, $N_{TA}$ may provide differential adjustment through the MAC CE of the network device. That is to say, a current $N_{TA}$ adjustment ($N_{(TA_{new})}$) is based on a previous $N_{TA}$ adjustment ($N_{(TA_{old})}$), and is a forward or backward adjustment in time. The formula for calculating the $N_{TA}$ adjustment is as follows:

$$N_{(TA_{new})} = N_{(TA_{old})} + (T_A - 31) * 16 * 64 * /2^{\mu} \qquad (2).$$

In the formula above, $\mu$ represents the subcarrier spacing, and $T_A$ represents the quantified TA value.

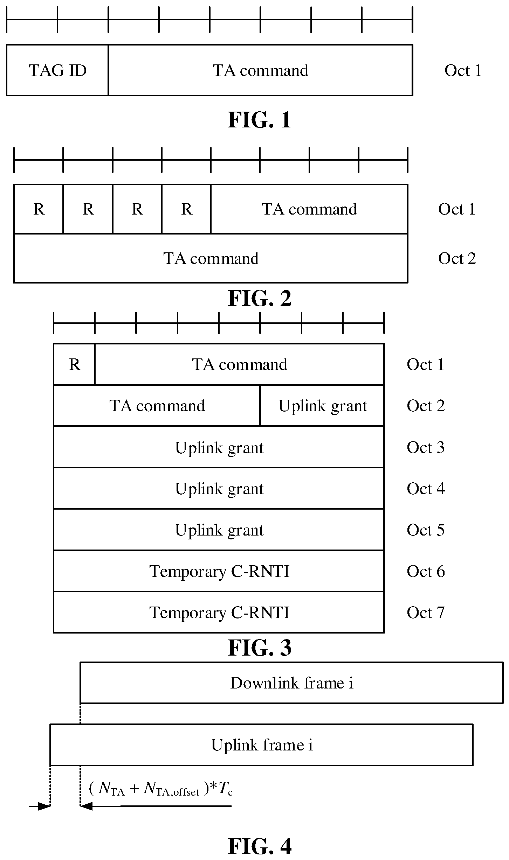

FIG. 1 illustrates a first schematic diagram of an adjustment format of a timing advance value. The format of the differential adjustment of TA value of an MAC CE may be that an adjustment with minimum time units is performed based on the old TA, and the TA adjustment has the granularity of TAG. As illustrated in FIG. 1, the MAC CE is encoded by taking 8 bits as one byte, where the TAG ID has a length of 2 bits, the TA command (i.e., the timing advance command) has a length of 6 bits, and Oct 1 represents one byte, i.e., 8 bits.

In a second manner of calculating $N_{TA}$, an MAC CE of the network device directly gives an absolute value of the $N_{TA}$ that has a value range from 0 to 3846, and an indication range of the absolute value of the $N_{TA}$ for the TA is $N_{TA} = T_A$ *16*64*$2^{\mu}$. In this case, the network device may indicate the absolute value of the TA of the uplink transmission of the terminal device to the terminal device.

FIG. 2 illustrates a second schematic diagram of an adjustment format of a timing advance value. The TA command is applicable to a Primary Timing Advance Group (PTAG) corresponding to the MAC entity. In this case, since the MAC CE is applicable to only the PTAG, the MAC CE does not need to include a TAG-ID. As illustrated in FIG. 2, the MAC CE is encoded by taking 8 bits as one byte, where the TA command has a length of 12 bits, Oct 1 represents one byte, Oct 2 represents one byte, i.e., each of the Oct 1 and Oct 2 has a length of 8 bits, and R represents setting to 0.

In addition, in an initial access to a cell procedure of the terminal device, when the terminal device sends a PRACH to network device, the terminal device expects the network device to send a TA indication through an MAC RAR within a certain time window.

FIG. 3 illustrates a schematic diagram of signaling indicating a timing advance value. As illustrated in FIG. 3, in this signaling, the TA command has a length of 12 bits, the UpLink Grant (UL Grant) has a length of 27 bits, the Temporary Cell-Radio Network Temporary Identifier (C-RNTI) has a length of 16 bits, each of Oct 1 to Oct 7 represents one byte, each of Oct 1 to Oct 7 has a length of 8 bits, and R represents setting to 0. In this way, the terminal device may obtain the initial absolute value of the TA, and the absolute value of the TA has a length of 12 bits.

FIG. 4 illustrates a schematic diagram of a reference point for a timing advance value. As illustrated in FIG. 4, if the terminal device operates in a Single Transmission/Reception Point (STRP) mode, the reference point for the TA value of the terminal device may start from a reception time point of a downlink frame i, advance a time $(N_{TA} + N_{TA,offset})*T_C$ forward is used as the transmission time point of the uplink frame i, thereby sending the uplink channel or signal.

The embodiments of the present disclosure relate to a Neural Network (NN), which is briefly introduced below from three aspects: the neuron structure, a deep neural network, and acquisition of a neural network model.

(1) Neuron structure.

The NN is an operation model formed by multiple neuron nodes connected with each other. The connections between nodes represent the weighted values from the input signals to the output signal, and are called weights. The weighted summation is performed on different input signals at each node and output is performed through a specific activation function. The neuron structure is illustrated in FIG. 2. Herein, $a_1$, $a_2$, ..., $a_n$ and 1 represent the inputs of the neuron, $w_1$, $w_2$, ..., $w_n$ and b represent the weights, Sum represents the summation function, f represents the activation function, and t represents the output.

(2) Deep neural network.

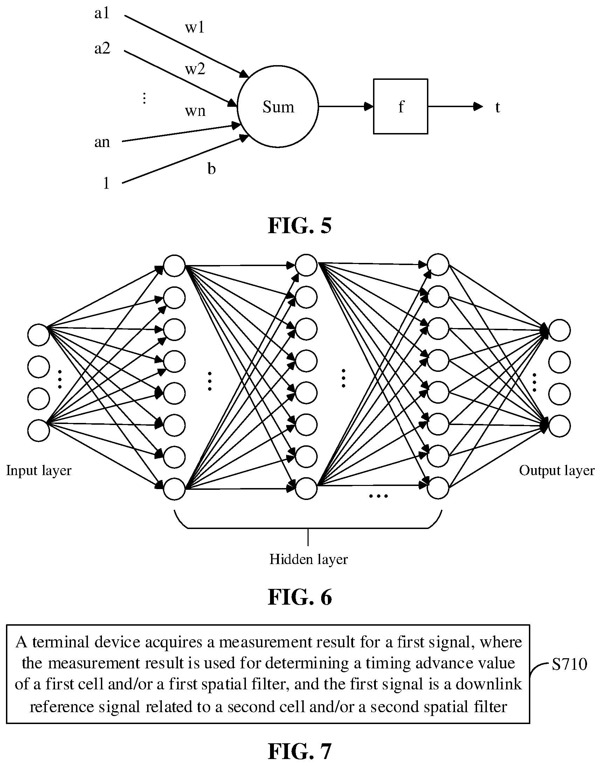

FIG. 6 illustrates a simple neural network. The NN includes an input layer, hidden layers and an output layer. Through different connection manners between multiple neurons and combining different weights and activation functions, different outputs may be generated, thereby fitting mapping relationships from the inputs to the outputs. Exemplarily, each previous-level node is connected to all of its next-level nodes, to form a fully connected model. The fully connected model may also be called as a Deep Neural Network (DNN). In the embodiment of the present disclosure, the NN model may be used for performing beam prediction in the spatial domain.

(3) Acquisition of a neural network model.

An NN model may be obtained by being trained through the processes of construction, training, verification and testing of a data set. In the embodiment of the present disclosure, it is assumed that the NN model has been trained in advance in a manner of offline training and/or online training. It is to be noted that the offline training is not mutually exclusive to the online training. For example, the network device may firstly obtain a static training result through the offline training of the data set, and this process may be called as the offline training. In the process of the network device or the terminal device using the NN model, with further measurements and/or reporting by the terminal device, the NN model may continue to collect more data, and the real-time online training may be performed to optimize the parameters of the NN model, thereby achieving better inference and prediction results.

It is to be noted that in the embodiment of the present disclosure, the output of the NN model may be understood as inference or prediction. It is to be understood that in the embodiments of the present disclosure, the inference have the same meaning as the prediction, and the two may be interchangeable.

In the embodiment of the present disclosure, there are two measurement indicators for the input of the NN model, and the two measurement indicators include: Channel Impulse Response (CIR) and Power Delay Profile (PDP), which are briefly described below, respectively.

The CIR represents the time-domain response of the signal in the transmission path. The CIR reflects the phenomena of multipath propagation, delay spread and fading that may occur during the signal transmission. When a transmitted signal passes through a wireless channel, it will go through multiple different paths, resulting in multiple copies of the signal with different arrival times and amplitudes existing at the receiving end. The CIR describes information such as arrival times, amplitudes, and phases of these copy signals.

The CIR is usually expressed in the form of an impulse response function or a frequency response function. The impulse response function describes the response of the channel to the unit pulse input, and the frequency response function represents the responses of the channel to different frequency signals. These functions may be obtained by measurement technology, simulation technology, or estimation technology.

(ii) The PDP is a spectral representation used for describing the power distribution of different delay components in a channel. The PDP represents the amount of energy or power occupied by each delay component in the channel response. Typically, the PDP of the channel is acquired by the channel measurement. The measurement method may be that a specific test signal is sent and sampled in the channel, and then the PDP is obtained through the channel estimation algorithm.

The embodiments of the present disclosure also relate to a beam (pair), and the meaning of "beam (pair)" means "beam" or "a pair of beams". Specifically, in the embodiments of the present disclosure, a beam may refer to a transmit beam or a receive beam, and a beam pair may refer to a pair of a transmit beam and a receive beam. In the protocol, a "spatial filter" may be used to replace a "beam".

In the related art, the delay of uplink transmissions from different terminal devices in the same cell to the network device may be different, and in this case, the TA value may be used for performing the uplink synchronization among the terminal devices, so that the times when the uplink transmissions from the terminal devices arrives to the network device are almost the same, so as to ensure that no interference occurs between the terminal devices.

In the current NR protocol (from R15 to R17), for the initial access stage, the terminal device may obtain the TA value through the MAC RAR or MAC CE fed back by the network device after sending the PRACH to the network device, so as to implement the uplink synchronization with other terminal devices in the same cell. However, the process of obtaining the TA value requires a certain amount of uplink resource (e.g., a PRACH time-frequency resource or a preamble time-frequency resource) occupation and time overheads (e.g., the first-step PRACH procedure and the second-step RAR RACH procedure).

In addition, in the mobility enhancement in R18 of the NR, although the TA value of the target cell is obtained by measuring the downlink time difference (the time difference between the target cell and the serving cell that has been uplink synchronized), it is still necessary to use a specific serving cell that has been uplink synchronized as a reference, and multiple cells are required to use a synchronized timeline in the uplink. Therefore, although this method of obtaining the TA eliminates the transmission of the PRACH, the required conditions are relatively stringent.

Based on this, the embodiments of the present disclosure provide a communication method. The terminal device acquires a measurement result for a first signal, where the measurement result for the first signal is used for determining a timing advance value of a first cell and/or a first spatial filter, and the first signal is a downlink reference signal related to a second cell and/or a second spatial filter. In this way, after obtaining the measurement result for the first signal, the terminal device may subsequently obtain the timing advance value of the first cell and/or the first spatial filter based on the measurement result, so that the terminal device is able to obtain the timing advance value without sending the PRACH to the network device, thereby saving time-frequency resources and time overheads.

For convenience of understanding the technical solutions of the embodiments of the present disclosure, the technical solutions in the present disclosure are described below through the detailed embodiments. The aforementioned related technologies, used as optional solutions, may be combined with the technical solutions of the embodiments of the present disclosure in various ways, and the combinations shall fall within the scope of the protection of the embodiments of the present disclosure. The embodiments of the present disclosure include at least some of the following contents.

FIG. 7 illustrates a first flowchart of a communication method according to an embodiment of the present disclosure. As illustrated in FIG. 7, the method includes following operation S710.

In operation S710, a terminal device acquires a measurement result for a first signal, where the measurement result is used for determining a timing advance value of a first cell and/or a first spatial filter, and the first signal is a downlink reference signal related to a second cell and/or a second spatial filter.

It is to be noted that the first spatial filter is an uplink spatial filter for the first cell, and the second spatial filter is an uplink spatial filter for the second cell.

It is further to be noted that the number of each of the first cells, the first spatial filters, the second cells and the second spatial filters is one or more.

It is further to be noted that the timing advance values determined through the measurement result may be different depending on whether the first cell is the same as the second cell.

Exemplarily, in a case where the first cell is the same as the second cell, the timing advance value of the same cell and/or the same spatial filter may be determined based on the measurement result for the downlink reference signal related to the second cell and/or the second spatial filter.

Exemplarily, in a case where the first cell is the different from the second cell, the timing advance values of the different cells and/or the different spatial filters may be determined based on the measurement result(s) for the downlink reference signal related to the second cell and/or the second spatial filter.

In some embodiments, the first signal includes: a Synchronization Signal and Physical Broadcast Channel (PBCH) Block (SSB), and/or a Channel State Information Reference Signal (CSI-RS).

The CSI-RS includes a CSI-RS for mobility.

In some embodiments, the operation that the terminal device acquires the measurement result for the first signal may include: the terminal device measures the first signal based on a first measurement indicator to obtain the measurement result for the first signal.

Furthermore, the first measurement indicator may include one or more of the followings:

    a receiving power of the first signal;
    a receive timing difference of the first signal;
    a channel impulse response of the first signal; and
    a power delay profile of the first signal.

It is to be noted that, in a case where the first measurement indicator is the receiving power of the first signal, for the measurement of the mobility enhancement, the terminal device may measure both the receiving power of the first signal of the current serving cell and the receiving power(s) of the first signal of the candidate cell(s).

Furthermore, a Physical Cell Identifier (PCI) of the candidate cell is different from the PCI of the serving cell.

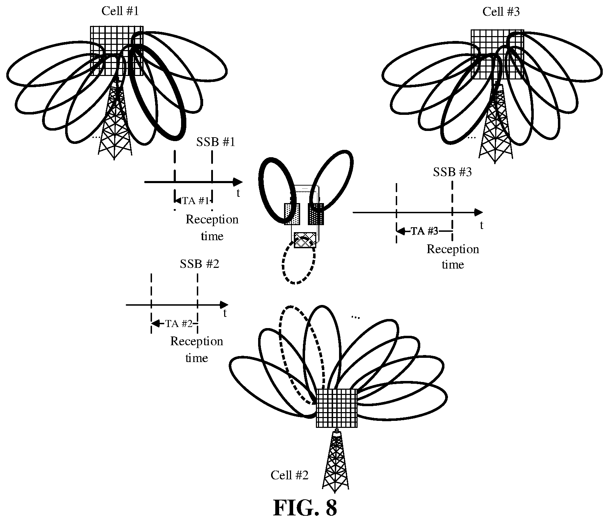

Exemplarily, FIG. 8 illustrates a first schematic diagram of a scenario where a terminal device acquires a measurement result for a first signal. As illustrated in FIG. 8, it is assumed that there are three second cells denoted as cell #1, cell #2, and cell #3, respectively, and downlink reference signals (i.e., first signals) related to the cell #1, cell #2, and cell #3 are SSB #1, SSB #2, and SSB #3, respectively. The terminal device may measure the SSB #1, SSB #2, and SSB #3 based on the receiving powers of the first signals to obtain measurement results for the first signals, use the reception times of the SSB #1 and/or the SSB #2 and/or the SSB #3 as the starting points of the timing advances, and may determine the timing advance values of the first cells and/or the first spatial filters (i.e., TA #1, and/or TA #2 and/or TA #3) by using the measurement results.

It is to be noted that the receiving power of the first signal may be a physical layer-downlink Reference Signal Receiving Power (or L1-RSRP).

In some embodiments, the receive timing difference of the first signal may have the following two possible implementations.

In a possible implementation, the receive timing difference of the first signal is a difference between the reception time of the first signal and a preset time.

It is to be noted that the preset time may be configured by the network device, or the preset time may be predefined in the protocol, or the preset time may be determined in other manners, which is not limited in the embodiments of the present disclosure.

Exemplarily, the network device may be a network device associated with the second cell and/or the second spatial filter.

In the other possible implementation, the receive timing difference of the first signal is a difference between a reception time of the first signal and a reception time of a second signal, and the second signal is a downlink reference signal related to a third cell and/or a third spatial filter.

That is to say, the terminal device may use a specific downlink reference signal (e.g., the second signal) as a reference, to measure the difference between the reception time of another downlink reference signal (e.g., the first signal) and the reception time of the specific downlink reference signal.

It is to be noted that the third spatial filter is an uplink spatial filter for the third cell.

It is further to be noted that the third cell may be the same as the first cell, and the third cell may be different from the first cell; the third cell may be the same as the second cell, and the third cell may be different from the second cell, which is not limited in the embodiments of the present disclosure.

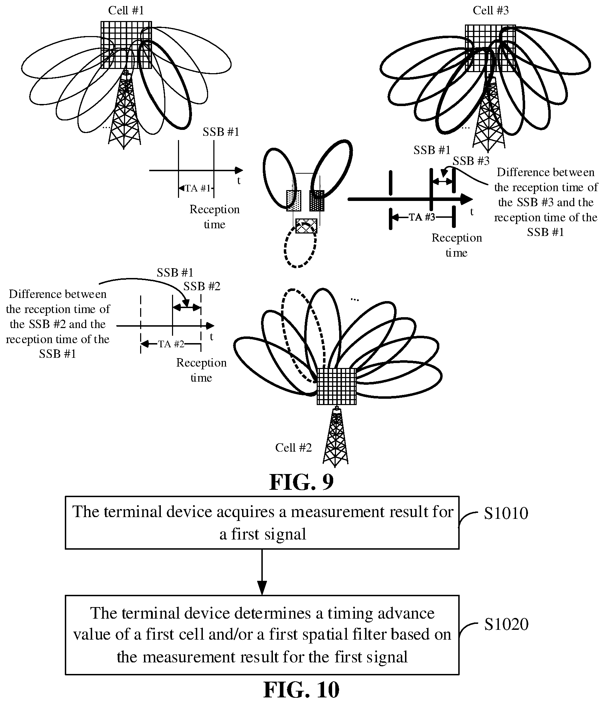

Exemplarily, FIG. 9 is a second schematic diagram of a scenario where a terminal device acquires a measurement result for a first signal. As illustrated in FIG. 9, it is assumed that there are two second cells denoted as cell #2 and cell #3, respectively, and downlink reference signals (i.e., first signals) related to the cell #2 and the cell #3 are an SSB #2 and an SSB #3, respectively; and the third cell is denoted as cell #1, and the downlink reference signal (i.e., the second signal) related to the cell #1 is an SSB #1. The terminal device may calculate, using the SSB #1 as the reference, a difference (or time gap) between the reception time of the SSB #2 and the reception time of the SSB #1, and a difference between the reception time of the SSB #3 and the reception time of the SSB #1, respectively. The terminal device may measure the SSB #2 and SSB #3 based on the difference between the reception time of the SSB #2 and the reception time of the SSB #1 and the difference between the reception time of the SSB #3 and the reception time of the SSB #1, to obtain the measurement results for the first signals, use the reception times of the SSB #1 and/or the SSB #2 and/or the SSB #3 as the starting points of the timing advances, and may determine the timing advance values for the first cells and/or the first spatial filters (i.e., TA #1, and/or TA #2 and/or TA #3) by using the measurement results.

In some embodiments, the second signal is obtained based on a configuration of the network device and/or a preset rule.

It is to be noted that the network device may be a network device associated with the second cell and/or the second spatial filter.

Exemplarily, the second signal is obtained based on a configuration of the network device. For example, the second signal may be obtained based on the RRC configuration. For another example, the second signal may come from a Downlink/Joint Transmission Configuration Indication State (DL/Joint TCI State) indicated by the network device.

Exemplarily, the second signal is obtained based on a preset rule. For example, the second signal may be obtained based on selection by the terminal device from a serving cell, and the serving cell is from the third cell.

In some embodiments, the terminal device may communicate with the network device based on the timing advance value.

It is to be noted that the network device may be a network device associated with the first cell and/or the first spatial filter.

Furthermore, the operation that the terminal device communicates with the network device based on the timing advance value may include: the terminal device communicates, based on the timing advance value, with a network device related to the first cell and/or the first spatial filter.

It is to be noted that after obtaining the timing advance value, the terminal device may determine and adjust the timing advance value by itself, and then may communicate, based on the adjusted timing advance value, with the network device related to the first cell and/or the first spatial filter.

The embodiment of the present disclosure provides a communication method. The terminal device acquires a measurement result for a first signal, where the measurement result for the first signal is used for determining a timing advance value of a first cell and/or a first spatial filter, and the first signal is a downlink reference signal related to a second cell and/or a second spatial filter. In this way, after obtaining the measurement result for the first signal, the terminal device may subsequently obtain the timing advance value of the first cell and/or the first spatial filter based on the measurement result, so that the terminal device is able to obtain the timing advance value without sending the PRACH to the network device, thereby saving time-frequency resources and time overheads.

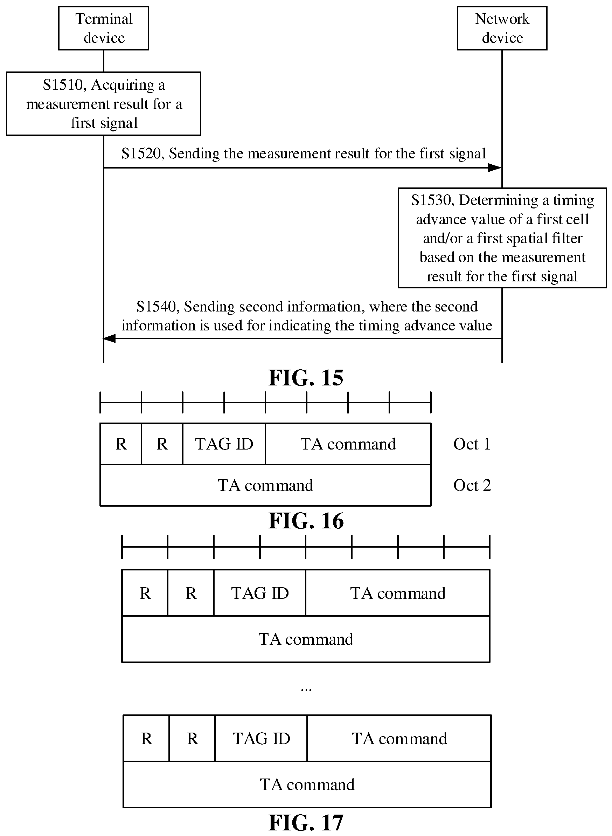

Based on the operation S710, the terminal device may acquire the measurement result for a first signal, where the measurement result is used for determining a timing advance value of a first cell and/or a first spatial filter. The terminal device may directly determine the timing advance value of the first cell and/or the first spatial filter based on the measurement result (FIG. 10). Alternatively, the terminal device sends the measurement result to the network device, and obtains the timing advance value of the first cell and/or the first spatial filter through the indication of the network device (FIG. 15). Hereinafter, a detailed flow of the terminal device obtaining the timing advance value of the first cell and/or the first spatial filter will be described through a manner #A and a manner #B with reference to FIG. 10 to FIG. 19, respectively.

In the manner #A, the terminal device directly determines the timing advance value of the first cell and/or the first spatial filter based on the measurement result.

FIG. 10 illustrates a second flowchart of a communication method according to an embodiment of the present disclosure. As illustrated in FIG. 10, the method may include an operation S1010 to an operation S1020.

In operation S1010, the terminal device acquires a measurement result for a first signal.

In operation S1020, the terminal device determines a timing advance value of a first cell and/or a first spatial filter based on the measurement result for the first signal.

It is to be noted that the operation that the terminal device determines the timing advance value of the first cell and/or the first spatial filter based on the measurement result for the first signal may have following several implementations.

In a possible implementation, the operation that the terminal device determines the timing advance value of the first cell and/or the first spatial filter based on the measurement result for the first signal may include: the terminal device determines the timing advance value of the first cell and/or the first spatial filter based on mapping relationships and the measurement result for the first signal, and the mapping relationships represent mapping relationships between measurement results and timing advance values.

It is to be noted that the mapping relationships may be predefined, or configured by the network device, may be set by experiments or other manner, which is not limited in the embodiments of the present disclosure.

Exemplarily, the mapping relationships may be in the form of a mapping table constructed between the measurement results and the timing advance values.

Exemplarily, the mapping relationships between the measurement result and the timing advance value may be one-to-one mapping relationships between the measurement results and the timing advance values. That is to say, the terminal device may determine a unique timing advance value of the first cell and/or the first spatial filter based on the measurement result for the first signal.

According to the method, the terminal device may determine the timing advance value of the first cell and/or the first spatial filter based on the mapping relationships and the measurement result for the first signal. In this way, after the terminal device obtains the mapping relationships and the measurement result for the first signal, the terminal device may obtain the timing advance value of the first cell and/or the first spatial filter based on the mapping relationships and the measurement result. Thus, the terminal device is able to obtain the timing advance value without sending the PRACH to the network device and without through the MAC RAR or MAC CE fed back from the network device, thereby saving time-frequency resources and time overheads.

In another possible implementation, the operation that the terminal device determines the timing advance value of the first cell and/or the first spatial filter based on the measurement result for the first signal may include: the terminal device inputs the measurement result for the first signal into a second model to determine the timing advance value of the first cell and/or the first spatial filter.

Herein, the second model may be a second neural network model.

Exemplarily, the second neural network model may be obtained by being trained through the processes of the construction, the training, the verification and the testing of the data set by the terminal device.

Exemplarily, the second neural network model may be obtained by being trained in advance in the manner of the offline training and/or the online training by the terminal device.

Exemplarily, the second neural network model may be an Artificial Intelligence (AI) model or a Machine Learning (ML) model.

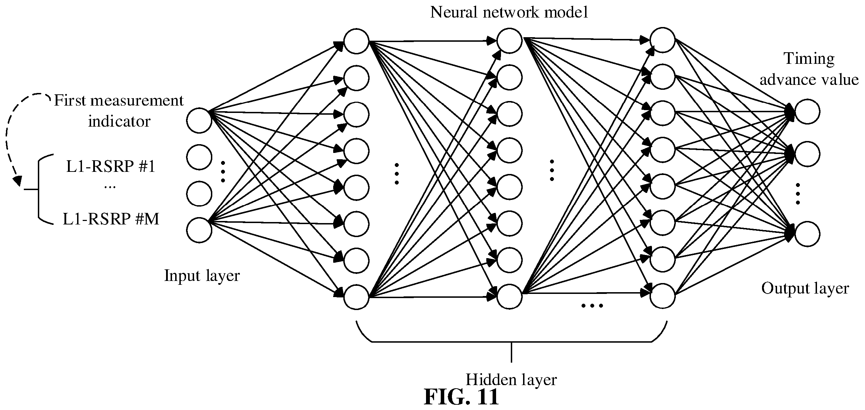

FIG. 11 illustrates a first schematic diagram of a neural network model. As illustrated in FIG. 11, the first measurement indicator may be the receiving power of the first signal (e.g., L1-RSRP #1, ..., L1-RSRP #M, where M is a positive integer), and the measurement result for the first signal may be a measurement result obtained based on the receiving power of the first signal. The terminal device inputs the measurement result obtained based on the receiving power of the first signal into the input layer, and the measurement result is transmitted via the hidden layers in the middle, and the timing advance value of the first cell and/or the first spatial filter may be finally outputted through the output layer.

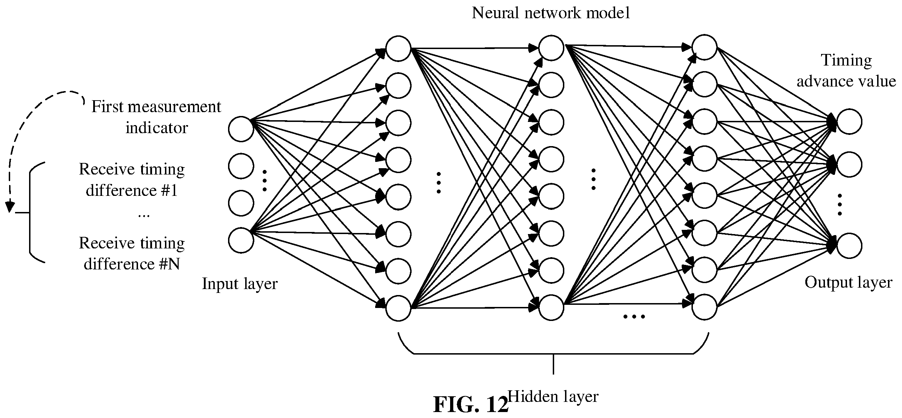

FIG. 12 illustrates a second schematic diagram of a neural network model. As illustrated in FIG. 12, the first measurement indicator may be the receive timing difference of the first signal (e.g., the receive timing difference #1, ..., receive timing difference #N, where N is a positive integer), and the measurement result for the first signal may be a measurement result obtained by the receive timing difference of the first signal. The terminal device may input the measurement result obtained based on the receive timing difference of the first signal into the input layer, and the measurement result is transmitted via the hidden layers in the middle, and the timing advance value of the first cell and/or the first spatial filter may be finally outputted through the output layer.

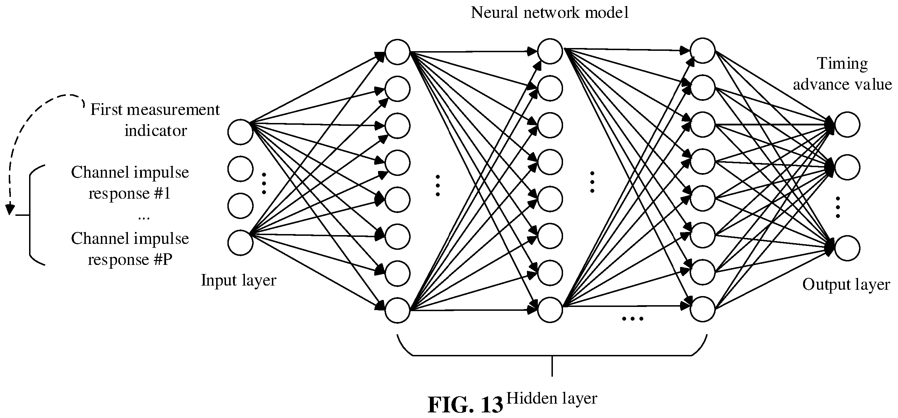

FIG. 13 illustrates a third schematic diagram of a neural network model. As illustrated in FIG. 13, the first measurement indicator may be the channel impulse response of the first signal (e.g., channel impulse response #1, ..., channel impulse response #P, where P is a positive integer), and the measurement result for the first signal may be a measurement result obtained by the channel impulse response of the first signal. The terminal device may input the measurement result obtained based on the channel impulse response of the first signal into the input layer, and the measurement result is transmitted via the hidden layers in the middle, and the timing advance value of the first cell and/or the first spatial filter may be finally outputted through the output layer.

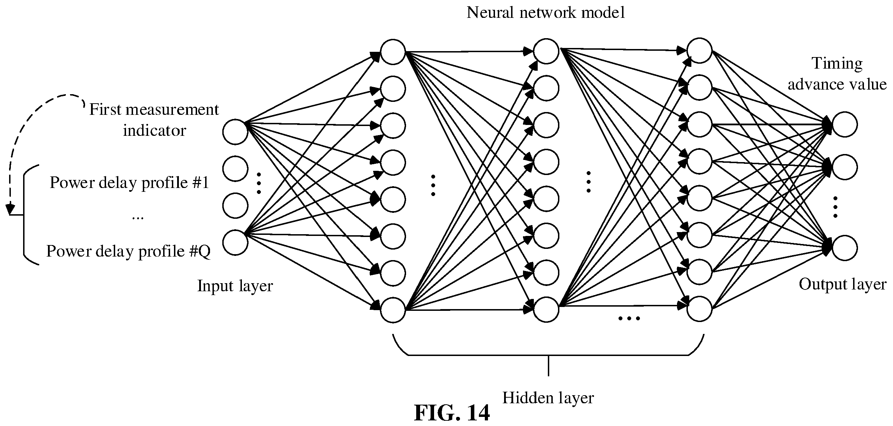

FIG. 14 illustrates a fourth schematic diagram of a neural network model. As illustrated in FIG. 14, the first measurement indicator may be the power delay profile of the first signal (e.g., the power delay profile #1, ..., power delay profile #Q, where Q is a positive integer), and the measurement result for the first signal may be a measurement result obtained by the power delay profile of the first signal. The terminal device may input the measurement result obtained based on the power delay profile of the first signal into the input layer, and the measurement result is transmitted via the hidden layers in the middle, and the timing advance value of the first cell and/or the first spatial filter may be finally outputted through the output layer.

It is to be noted that the second model may be a second neural network model or another model, which is not limited in the embodiments of the present disclosure.

It is further to be noted that the outputs of the second model (i.e., the timing advance values) obtained by the terminal device may be different depending on whether the first cell is the same as the second cell.

Exemplarily, in a case where the first cell is the same as the second cell, the terminal device inputs the measurement result for the first signal into the second model, so that the timing advance value of the same cell and/or the same spatial filter can be outputted.

For example, the terminal device inputs the measurement result obtained based on the receiving power of the first signal into the second model, so that the timing advance value of the same cell and/or the same spatial filter can be outputted.

For another example, the terminal device inputs the measurement result obtained based on the receive timing difference of the first signal into the second model, so that the timing advance value of the same cell and/or the same spatial filter can be outputted.

Exemplarily, in a case where the first cell is different from the second cell, the terminal device inputs the measurement result for the first signal into the second model, so that the timing advance values of the different cells and/or the different spatial filters can be outputted.

For example, the terminal device inputs the measurement result obtained based on the receiving power of the first signal into the second model, so that the timing advance values of the different cells and/or the different spatial filters can be outputted.

For another example, the terminal device inputs the measurement result obtained based on the receive timing difference of the first signal into the second model, so that the timing advance values of the different cells and/or the different spatial filters can be outputted.

According to the method, the terminal device may determine the timing advance value of the first cell and/or the first spatial filter through inputting the measurement result for the first signal into the second model. In this way, after obtaining the measurement result for the first signal, the terminal device may input the measurement result for the first signal into the second model to obtain the timing advance value of the first cell and/or the first spatial filter. Thus, the terminal device is able to obtain the timing advance value without sending the PRACH to the network device and without through the MAC RAR or MAC CE fed back from the network device, thereby saving time-frequency resources and time overheads.

In another possible implementation, the operation that the terminal device determines the timing advance value of the first cell and/or the first spatial filter based on the measurement result for the first signal may include: the terminal device inputs the measurement result for the first signal and first information into a first model to determine the timing advance value of the first cell and/or the first spatial filter, and the first information includes one or more of the followings:

> resource index information of the first signal;
> index information of the second cell;
> index information of the first cell; and
> index information of the first spatial filter.

Exemplarily, the index information may be the PCI.

Herein, the first model may be a first neural network model.

Exemplarily, the first neural network model may be obtained by being trained through the processes of the construction, the training, the verification and the testing of the data set by the terminal device.

Exemplarily, the first neural network model may be obtained by being trained in advance in the manner of the offline training and/or the online training by the terminal device.

Exemplarily, the first neural network model may be an AI model or an ML model.

It is to be noted that the first model may be the same as the second model or may be different from the second model, which is not limited in the embodiments of the present disclosure.

As illustrated in FIG. 11, in a case where the measurement result for the first signal is a measurement result obtained based on the receiving power of the first signal, the terminal device inputs the measurement result obtained based on the receiving power of the first signal together with the first information into the input layer, and the measurement result is transmitted via the hidden layers in the middle, and the timing advance value of the first cell and/or the first spatial filter may be finally outputted through the output layer.

As illustrated in FIG. 12, in a case where the measurement result for the first signal is a measurement result obtained through the receive timing difference of the first signal, the terminal device inputs the measurement result obtained based on the receive timing difference of the first signal together with the first information into the input layer, and the measurement result is transmitted via the hidden layers in the middle, and the timing advance value of the first cell and/or the first spatial filter may be finally outputted through the output layer.

As illustrated in FIG. 13, in a case where the measurement result for the first signal is a measurement result obtained through the channel impulse response of the first signal, the terminal device inputs the measurement result obtained based on the channel impulse response of the first signal together with the first information into the input layer, and the measurement result is transmitted via the hidden layers in the middle, and the timing advance value of the first cell and/or the first spatial filter may be finally outputted through the output layer.

As illustrated in FIG. 14, in a case where the measurement result for the first signal is a measurement result obtained through the power delay profile of the first signal, the terminal device inputs the measurement result obtained based on the power delay profile of the first signal together with the first information into the input layer, and the measurement result is transmitted via the hidden layers in the middle, and the timing advance value of the first cell and/or the first spatial filter may be finally outputted through the output layer.

It is to be noted that the first model may be a first neural network model or another model, which is not limited in the embodiments of the present disclosure.

It is further to be noted that the outputs of the first model (i.e., the timing advance values) obtained by the terminal device may be different depending on whether the first cell is the same as the second cell.

Exemplarily, in a case where the first cell is the same as the second cell, the terminal device inputs the measurement result for the first signal and the first information into the first model, so that the timing advance value of the same cell and/or the same spatial filter can be outputted.

For example, the terminal device inputs the measurement result for the first signal and the resource index information of the first signal into the first model, so that the timing advance value of the same cell and/or the same spatial filter can be outputted.

For another example, the terminal device inputs the measurement result for the first signal and the index information of the second cell into the first model, so that the timing advance value of the same cell and/or the same spatial filter can be outputted.

Exemplarily, in a case where the first cell is different from the second cell, the terminal device inputs the measurement result for the first signal and the first information into the first model, so that the timing advance values of the different cells and/or the different spatial filters can be outputted.

For example, the terminal device inputs the measurement result for the first signal and the index information of the first cell into the first model, so that the timing advance values of the different cells and/or the different spatial filters can be outputted.

For another example, the terminal device inputs the measurement result for the first signal and the index information of the first spatial filter into the first model, so that the timing advance values of the different cells and/or the different spatial filters can be outputted.

According to the method, the terminal device may determine the timing advance value of the first cell and/or the first spatial filter through inputting the measurement result for the first signal and the first information into the first model. In this way, after the terminal device obtains the measurement result for the first signal and the first information, the terminal device may input the measurement result for the first signal and the first information into the first model to obtain the timing advance value of the first cell and/or the first spatial filter. Thus, the terminal device is able to obtain the timing advance value without sending the PRACH to the network device and without through the MAC RAR or MAC CE fed back from the network device, thereby saving time-frequency resources and time overheads.

It is to be noted that the terminal device may determine the timing advance value of the first cell and/or the first spatial filter based on one or more of the aforementioned three possible implementations. That is to say, the terminal device may determine the timing advance value of the first cell and/or the first spatial filter based on one or more of the followings:

the terminal device may obtain the timing advance value of the first cell and/or the first spatial filter based on the mapping relationships and the measurement result for the first signal; and/or
the terminal device may input the measurement result for the first signal into the second model, and obtain the timing advance value of the first cell and/or the first spatial filter through the output of the second model; and/or
the terminal device may input the measurement result for the first signal and the first information into the first model, and obtain the timing advance value of the first cell and/or the first spatial filter through the output of the first model.

It is to be understood that in a case where the terminal device obtains the timing advance value of the first cell and/or the first spatial filter based on the aforementioned manners, the timing advance values may be the same or different. It is to be understood that in a case where the timing advance values obtained by the terminal device based on the aforementioned manners are different, the difference between the different timing advance values may be within an allowable error range.

The embodiment of the present disclosure provides a communication method where the terminal device may determine the timing advance value of the first cell and/or the first spatial filter based on the measurement result for the first signal. In this way, after obtaining the measurement result for the first signal, the terminal device may subsequently obtain the timing advance value of the first cell and/or the first spatial filter based on the measurement result. Thus, the terminal device is able to obtain the timing advance value without sending the PRACH to the network device and without through the MAC RAR or MAC CE fed back from the network device, thereby saving time-frequency resources and time overheads.

In the manner #B, the terminal device sends the measurement result to the network device, and obtains the timing advance value of the first cell and/or the first spatial filter through the indication of the network device.

FIG. 15 illustrates a third flowchart of a communication method according to an embodiment of the present disclosure. As illustrated in FIG. 15, the method may include operation S1510 to operation S1540.

In operation S1510, the terminal device acquires a measurement result for a first signal.

In operation S1520, the terminal device sends the measurement result for the first signal to a network device.

In operation S1530, the network device determines a timing advance value of a first cell and/or a first spatial filter based on the measurement result for the first signal.

In operation S1540, the network device sends second information to the terminal device, where the second information is used for indicating the timing advance value.

Accordingly, the network device may receive the measurement result for the first signal from the terminal device.

Accordingly, the terminal device may receive the second information from the network device.

Herein, the measurement result for the first signal is used for determining a timing advance value of a first cell and/or a first spatial filter, and the first signal is a downlink reference signal related to a second cell and/or a second spatial filter.

In some embodiments, the measurement result for the first signal may be carried by Uplink Control Information (UCI). That is to say, the terminal device may send the measurement result for the first signal to the network device through the UCI.

Exemplarily, in a case where the measurement result for the first signal is a measurement result of the receiving power of the first signal, the terminal device may send the measurement result of the receiving power of the first signal to the network device through the UCI.

Exemplarily, in a case where the measurement result for the first signal is a measurement result of the receive timing difference of the first signal, the terminal device may send the measurement result of the receive timing difference of the first signal to the network device through the UCI.

In some embodiments, in the case where the measurement result for the first signal is the measurement result of the receiving power of the first signal, when the terminal device reports (i.e., sends) the measurement result of the receiving power of the first signal to the network device, the measurement result of the receiving power of the current serving cell in the second cells and the measurement result of the receiving power of the candidate cell(s) may be reported in one reporting instance, and the specific reporting formats are illustrated in Table 1.

In Table 1, the terminal device may report a measurement result of the receiving power of the first signal. Each cell in the second cell(s) may be uniquely identified with the PCI or PCI index information. That is to say, the terminal device may use the PCI or PCI index to indicate the index information of each cell in the second cell(s). In one cell, the highest value of the measurement results of receiving powers is selected as a reference for differential reporting, and a CSI-RS Resource Indicator (CRI) or SSB Resource Indicator (SSBRI) corresponding to the highest value is reported, and values of measurement results of other receiving powers are reported in a differential form.

Table 1

| Reporting format of measurement results of receiving powers of the first signal | PCI or PCI index #1 |
| --- | --- |
| | CRI or SSBRI #1 |
| | RSRP #1 |
| | Differential RSRP #2 |
| | ... |
| | Differential RSRP #J |
| | ... |
| | PCI or PCI index #K |
| | CRI or SSBRI #K |
| | RSRP #1 |
| | Differential RSRP #2 |
| | ... |
| | Differential RSRP #J |

Exemplarily, there are K second cells denoted as cell #1, cell #2, ..., and cell #K, respectively, where K is a positive integer. In Table 1, the second cell may be uniquely identified by using the PCI or the PCI index. That is to say, the cell #1, cell #2, ..., cell #K may be identified as PCI or PCI index #1, PCI or PCI index #2, ..., PCI or PCI index #K, respectively. For example, in the cell #K, the cell #K is uniquely identified by using the PCI or PCI index #K, the highest value of the measurement results of the receiving powers is denoted as RSRP #1, the CRI or SSBRI corresponding to the highest value is denoted as CRI or SSBRI #K, and the values of the measurement results of the other receiving powers are denoted as differential RSRP #2, ..., and differential RSRP #J, respectively, where J is a positive integer. The values of the measurement results of the other receiving powers are reported in the differential form.

It is to be noted that in the NR system, the PCI itself is an ID having a length of 10 bits. To save the overheads of the reporting, the multiple PCIs may be further encoded. For example, 8 PCIs that have been configured in advance may be further encoded into a PCI index having a length of 3 bits.

In some embodiments, in the case where the measurement result for the first signal is the measurement result of the receive timing difference of the first signal, the terminal device may uniquely identify the second cell by using the PCI or PCI index when reporting the measurement result of the receive timing difference of the first signal to the network device. That is to say, the PCI or PCI index may be used to indicate the index information of the second cell. The terminal device may also indicate the resource index information of the first signal by using the CRI/SSBRI, and report the measurement result of the receive timing difference of the first signal according to a fixed order for the first signals configured in advance by the network device (for example, an ascending order of the resource index information of the first signals; for another example, an ascending order of the index information of the second cells sorted according to the PCIs or PCI indexes), and the specific reporting format is illustrated in Table 2.

Table 2

| Reporting format of measurement results of receive timing difference of the first signal | PCI or PCI index |
|---|---|
| | CRI or SSBRI |
| | receive timing difference #1 |
| | receive timing difference #2 |
| | ... |
| | receive timing difference #R |

Exemplarily, in Table 2, the second cell may be uniquely identified by using the PCI or PCI index, the resource index information of the first signal may be indicated by using the CRI/SSBRI, values of the measurement results of the receive timing differences of the first signal may be denoted as receive timing difference #1, receive timing difference #2, ..., and receive timing difference #R, respectively, and the receive timing difference #1, the receive timing difference #2, ..., and the receive timing difference #R may be reported, where R is a positive integer.

Furthermore, the terminal device may provide, in the reporting format, the PCI or the PCI index information of the cell to which each receive timing difference belongs and the resource index information of the downlink reference signal corresponding to each receive timing difference, and the specific reporting format is illustrated in Table 3.

Table 3

| Reporting format of measurement result of receive timing difference of the first signal | PCI or PCI index |
| --- | --- |
| | CRI or SSBRI |
| | PCI or PCI index #1 |
| | CRI or SSBRI #1 |
| | PCI or PCI index #2 |
| | **CRI** or **SSBRI** #2 |
| | ... |
| | PCI or PCI index #R |
| | CRI or SSBRI #R |
| | receive timing difference #1 |
| | receive timing difference #2 |
| | ... |
| | receive timing difference #R |

Exemplarily, in Table 3, the second cell may be uniquely identified by using the PCI or PCI index, the resource index information of the first signal may be indicated by using the CRI/SSBRI; the PCI or the PCI index information of the cell to which each of the receive timing differences belong may be denoted as PCI or PCI index #1, PCI or PCI index #2, ..., PCI or PCI index #R, respectively; the resource index information of the downlink reference signal corresponding to each of the receive timing differences is denoted as CRI or SSBRI #1, CRI or SSBRI #2, ..., CRI or SSBRI #R, respectively; and values of the measurement results of the receive timing differences of the first signals may be denoted as receive timing difference #1, receive timing difference #2, ..., and receive timing difference #R, respectively, and the receive timing difference #1, the receive timing difference #2, ..., and the receive timing difference #R may be reported.

In some embodiments, in the case where the measurement result for the first signal is the measurement result of the channel impulse response of the first signal or the measurement result of the power delay profile of the first signal, the terminal device may uniquely identify the second cell by using the PCI or PCI index when reporting the measurement result of the channel impulse response of the first signal or the measurement result of the power delay profile of the first signal to the network device. That is to say, the PCI or PCI index may be used to indicate the index information of the second cell. The terminal device may also indicate the resource index information of the first signal by using the CRI/SSBRI, and report the measurement result of the channel impulse response of the first signal or the measurement result of the power delay profile of the first signal according to a fixed order for the first signals configured in advance by the network device (for example, an ascending order of the resource index information of the first signals; for another example, an ascending order of the index information of the second cells sorted according to the PCIs or PCI indexes), and the specific reporting format is illustrated in Table 4.

Table 4

| Reporting format of measurement result of CTR of the first signal or measurement result of PDP of the first signal | PCI or PCI index |
| --- | --- |
| | CRI or SSBRI #1 |
| | CRI or SSBRI #2 |
| | ... |
| | CRI or SSBRI #L |
| | CIR or PDP #1 |
| | CIR or PDP #2 |
| | ... |
| | CIR or PDP #L |

Exemplarily, in Table 4, the second cell may be uniquely identified using the PCI or PCI Index, the resource index information of the downlink reference signal corresponding to each of the channel impulse responses or power delay profiles is denoted as CRI or SSBRI #1, CRI or SSBRI #2, ..., CRI or SSBRI #L, respectively; and the value of the measurement result of the channel impulse response of the first signal or the measurement result of the power delay profile of the first signal is denoted as CIR or PDP #1, CIR or PDP #2, ..., CIR or PDP #L, respectively, and the CIR or PDP #1, CIR or PDP #2, ..., CIR or PDP #L is reported.

It is to be noted that Table 4 illustrates the reporting format when there is one second cell; and when there are multiple second cells, the reporting formats here may be superimposed, which is not repeated herein.

In addition, in order to further save the reporting overheads when the terminal device reports the measurement result of the channel impulse response of the first signal or the measurement result of the power delay profile of the first signal, the resource index information of the first signal may be omitted; then the index information of the second cell may be indicated by the PCI or PCI index; and the measurement result of the channel impulse response of the first signal or the measurement result of the power delay profile of the first signal may be reported according to the fixed order for the first signals configured in advance by the network device (for example, the ascending order of the index information of the second cells sorted according to the PCIs or PCI indexes). The specific reporting formats are illustrated in Table 5.

Table 5

| Reporting format of measurement results of CTR of the first signal or measurement results of PDP of the first signals | PCI or PCI index |
| --- | --- |
| | CIR or PDP #1 |
| | CIR or PDP #2 |
| | ... |
| | CIR or PDP #L |

Exemplarily, in Table 5, the second cell may be uniquely identified using the PCI or PCI Index; and the value of the measurement result of the channel impulse response of the first signal or the measurement result of the power delay profile of the first signal is denoted as CIR or PDP #1, CIR or PDP #2, ..., CIR or PDP #L, respectively, and the CIR or PDP #1, CIR or PDP #2, ..., CIR or PDP #L is reported.

Through this method, the terminal device may send the measurement result for the first signal to the network device, and accordingly, the network device may receive the measurement result for the first signal. In this way, after obtaining the measurement result for the first signal, the network device may subsequently obtain the timing advance value of the first cell and/or the first spatial filter based on the measurement result; the network device indicates the timing advance value to the terminal device, so that the terminal device is able to obtain the timing advance value without sending the PRACH to the network device, thereby saving time-frequency resources and time overheads.

Based on S1520, in addition to sending the measurement result for the first signal to the network device, the terminal device may send the first information to the network device. The first information and the measurement result are used for determining the timing advance value of the first cell and/or the first spatial filter, and the first information includes one or more of the followings:

resource index information of the first signal;
index information of the second cell;
index information of the first cell; and
index information of the first spatial filter.

Accordingly, the network device may receive the first information from the terminal device.

It is to be noted that the operation that the network device acquires the first information may include: the network device receives the first information from the terminal device; and/or the network device acquires the first information by itself, which is not limited to the embodiment of the present disclosure.

Through this method, the network device is able to acquire the measurement result for the first signal and the first information. In this way, after obtaining the measurement result for the first signal and the first information, the network device may subsequently obtain the timing advance value of the first cell and/or the first spatial filter based on the measurement result and the first information; the network device indicates the timing advance value to the terminal device, so that the terminal device is able to obtain the timing advance value without sending the PRACH to the network device, thereby saving time-frequency resources and time overheads.

Based on S1530, the operation that the network device determines the timing advance value of the first cell and/or the first spatial filter based on the measurement result for the first signal may have following several implementations.

In a possible implementation, the operation that the network device determines the timing advance value of the first cell and/or the first spatial filter based on the measurement result for the first signal may include: the network device determines the timing advance value of the first cell and/or the first spatial filter based on mapping relationships and the measurement result for the first signal, and the mapping relationships represent mapping relationships between measurement results and timing advance values.

It is to be noted that the mapping relationships may be predefined, or configured by the network device, may be set by experiments or other manner, which is not limited in the embodiments of the present disclosure.

Exemplarily, the mapping relationships may be in the form of a mapping table constructed between the measurement results and the timing advance values.

Exemplarily, the mapping relationships between the measurement result and the timing advance value may be one-to-one mapping relationships between the measurement results and the timing advance values. That is to say, the network device may determine an unique timing advance value of the first cell and/or the first spatial filter based on the measurement result for the first signal.

According to the method, the network device may determine the timing advance value of the first cell and/or the first spatial filter based on the mapping relationships and the measurement result for the first signal. In this way, after the network device obtains the mapping relationships and the measurement result for the first signal, the network device may obtain the timing advance value of the first cell and/or the first spatial filter based on the mapping relationships and the measurement result; the network device indicates the timing advance value to the terminal device, so that the terminal device is able to obtain the timing advance value without sending the PRACH to the network device, thereby saving time-frequency resources and time overheads.

In another possible implementation, the operation that the network device determines the timing advance value of the first cell and/or the first spatial filter based on the measurement result for the first signal may include: the network device inputs the measurement result for the first signal into a second model to determine the timing advance value of the first cell and/or the first spatial filter.

Herein, the second model may be a second neural network model.

Exemplarily, the second neural network model may be obtained by being trained b through the processes of the construction, the training, the verification and the testing of the data set by the network device.

Exemplarily, the second neural network model may be obtained by being trained in advance in the manner of the offline training and/or the online training by the network device.

Exemplarily, the second neural network model may be an AI model or an ML model.

As illustrated in FIG. 11, the first measurement indicator may be the receiving power of the first signal (e.g., L1-RSRP #1, ..., L1-RSRP #M, where M is a positive integer), and the measurement result for the first signal may be a measurement result obtained based on the receiving power of the first signal. The network device may input the measurement result obtained based on the receiving power of the first signal into the input layer, and the measurement result is transmitted via the hidden layers in the middle, and the timing advance value of the first cell and/or the first spatial filter may be finally outputted through the output layer.

As illustrated in FIG. 12, the first measurement indicator may be the receive timing difference of the first signal (e.g., the receive timing difference #1, ..., receive timing difference #N, where N is a positive integer), and the measurement result for the first signal may be a measurement result obtained by the receive timing difference of the first signal. The network device may input the measurement result obtained based on the receive timing difference of the first signal into the input layer, and the measurement result is transmitted via the hidden layers in the middle, and the timing advance value of the first cell and/or the first spatial filter may be finally outputted through the output layer.

As illustrated in FIG. 13, the first measurement indicator may be the channel impulse response of the first signal (e.g., channel impulse response #1, ..., channel impulse response #P, where P is a positive integer), and the measurement result for the first signal may be a measurement result obtained based on the channel impulse response of the first signal. The network device may input the measurement result obtained based on the channel impulse response of the first signal into the input layer, and the measurement result is transmitted via the hidden layers in the middle, and the timing advance value of the first cell and/or the first spatial filter may be finally outputted through the output layer.

As illustrated in FIG. 14, the first measurement indicator may be the power delay profile of the first signal (e.g., the power delay profile #1, ..., power delay profile #Q, where Q is a positive integer), and the measurement result for the first signal may be a measurement result obtained by the power delay profile of the first signal. The network device may input the measurement result obtained based on the power delay profile of the first signal into the input layer, and the measurement result is transmitted via the hidden layers in the middle, and the timing advance value of the first cell and/or the first spatial filter may be finally outputted through the output layer.

It is to be noted that the second model may be a second neural network model or another model, which is not limited in the embodiments of the present disclosure.

It is further to be noted that the outputs of the second model (i.e., the timing advance values) obtained by the network device may be different depending on whether the first cell is the same as the second cell.

Exemplarily, in a case where the first cell is the same as the second cell, the network device inputs the measurement result for the first signal into the second model, so that the timing advance value of the same cell and/or the same spatial filter can be outputted.

For example, the network device inputs the measurement result obtained based on the receiving power of the first signal into the second model, so that the timing advance value of the same cell and/or the same spatial filter can be outputted.

For another example, the network device inputs the measurement result obtained based on the receive timing difference of the first signal into the second model, the timing advance value of the same cell and/or the same spatial filter can be outputted.

Exemplarily, in a case where the first cell is different from the second cell, the network device inputs the measurement result for the first signal into the second model, so that the timing advance values of the different cells and/or the different spatial filters can be outputted.

For example, the network device inputs the measurement result obtained based on the receiving power of the first signal into the second model, so that the timing advance values of the different cells and/or the different spatial filters can be outputted.

For another example, the network device inputs the measurement result obtained based on the receive timing difference of the first signal into the second model, so that the timing advance values of the different cells and/or the different spatial filters can be outputted.

According to the method, the network device may determine the timing advance value of the first cell and/or the first spatial filter through inputting the measurement result for the first signal into the second model. In this way, after obtaining the measurement result for the first signal, the network device may input the measurement result for the first signal into the second model to obtain the timing advance value of the first cell and/or the first spatial filter; the network device indicates the timing advance value to the terminal device, so that the terminal device is able to obtain the timing advance value without sending the PRACH to the network device, thereby saving time-frequency resources and time overheads.

In another possible implementation, the operation that the network device determines the timing advance value of the first cell and/or the first spatial filter based on the measurement result for the first signal may include: the network device inputs the measurement result for the first signal and first information into a first model to determine the timing advance value of the first cell and/or the first spatial filter, and the first information includes one or more of the followings:

resource index information of the first signal;
index information of the second cell;
index information of the first cell; and
index information of the first spatial filter.

Exemplarily, the index information may be the PCI.

Herein, the first model may be a first neural network model.

Exemplarily, the first neural network model may be obtained by being trained through the processes of the construction, the training, the verification and the testing of the data set by the network device.

Exemplarily, the first neural network model may be obtained by being trained in advance in the manner of the offline training and/or the online training by the network device.

Exemplarily, the first neural network model may be an AI model or an ML model.

It is to be noted that the first model may be the same as the second model or may be different from the second model, which is not limited in the embodiments of the present disclosure.

As illustrated in FIG. 11, in a case where the measurement result for the first signal is a measurement result obtained based on the receiving power of the first signal, the network device may input the measurement result obtained based on the receiving power of the first signal together with the first information into the input layer, and the measurement result is transmitted via the hidden layers in the middle, and the timing advance value of the first cell and/or the first spatial filter may be finally outputted through the output layer.

As illustrated in FIG. 12, in a case where the measurement result for the first signal is a measurement result obtained by the receive timing difference of the first signal, the network device may input the measurement result obtained based on the receive timing difference of the first signal together with the first information into the input layer, and the measurement result is transmitted via the hidden layers in the middle, and the timing advance value of the first cell and/or the first spatial filter may be finally outputted through the output layer.

As illustrated in FIG. 13, in a case where the measurement result for the first signal is a measurement result obtained by the channel impulse response of the first signal, the network device may input the measurement result obtained based on the channel impulse response of the first signal together with the first information into the input layer, and the measurement result is transmitted via the hidden layers in the middle, and the timing advance value of the first cell and/or the first spatial filter may be finally outputted through the output layer.

As illustrated in FIG. 14, in a case where the measurement result for the first signal is a measurement result obtained by the power delay profile of the first signal, the network device may input the measurement result obtained based on the power delay profile of the first signal together with the first information into the input layer, and the measurement result is transmitted via the hidden layers in the middle, and the timing advance value of the first cell and/or the first spatial filter may be finally outputted through the output layer.

It is to be noted that the first model may be a first neural network model or another model, which is not limited in the embodiments of the present disclosure.

It is further to be noted that the outputs of the first model (i.e., the timing advance values) obtained by the network device may be different depending on whether the first cell is the same as the second cell.

Exemplarily, in a case where the first cell is the same as the second cell, the network device inputs the measurement result for the first signal and the first information into the first model, so that the timing advance value of the same cell and/or the same spatial filter can be outputted.

For example, the network device inputs the measurement result for the first signal and the resource index information of the first signal into the first model, so that the timing advance value of the same cell and/or the same spatial filter can be outputted.

For another example, the network device inputs the measurement result for the first signal and the index information of the second cell into the first model, so that the timing advance value of the same cell and/or the same spatial filter can be outputted.

Exemplarily, in a case where the first cell is different from the second cell, the network device inputs the measurement result for the first signal and the first information into the first model, so that the timing advance values of the different cells and/or the different spatial filters can be outputted.

For example, the network device inputs the measurement result for the first signal and the index information of the first cell into the first model, so that the timing advance values of the different cells and/or the different spatial filters can be outputted.

For another example, the network device inputs the measurement result for the first signal and the index information of the first spatial filter into the first model, so that the timing advance values of the different cells and/or the different spatial filters can be outputted.

According to the method, the network device may determine the timing advance value of the first cell and/or the first spatial filter through inputting the measurement result for the first signal and the first information into the first model. In this way, after obtaining the measurement result for the first signal and the first information, the network device may input the measurement result for the first signal and the first information into the first model to obtain the timing advance value of the first cell and/or the first spatial filter; the network device indicates the timing advance value to the terminal device, so that the terminal device is able to obtain the timing advance value without sending the PRACH to the network device, thereby saving time-frequency resources and time overheads.

It is to be noted that the network device may determine the timing advance value of the first cell and/or the first spatial filter based on one or more of the aforementioned three possible implementations. That is to say, the network device may determine the timing advance value of the first cell and/or the first spatial filter based on one or more of the followings:

the network device may obtain the timing advance value of the first cell and/or the first spatial filter based on the mapping relationships and the measurement result for the first signal; and/or
the network device may input the measurement result for the first signal into the second model, and obtain the timing advance value of the first cell and/or the first spatial filter through the output of the second model; and/or
the network device may input the measurement result for the first signal and the first information into the first model, and obtain the timing advance value of the first cell and/or the first spatial filter through the output of the first model.

It is to be understood that in a case where the network device obtains the timing advance value of the first cell and/or the first spatial filter based on the aforementioned manners, the timing advance values may be the same or different. It is to be understood that in a case where the timing advance values obtained by the network device based on the aforementioned manners are different, the difference between the different timing advance values may be within an allowable error range.

It is to be noted that based on the operation S1010 to operation S1020 and the operation S1510 to operation S1530, the timing advance value obtained by the terminal device based on the measurement result for the first signal may be the same as or different from the timing advance value obtained by the network device based on the measurement result for the first signal. It is to be understood that in a case where the timing advance value obtained by the terminal device is different from the timing advance value obtained by the network device, the difference between the different timing advance values may be within an allowable error range.

Exemplarily, the mapping relationships between the measurement results and the timing advance values obtained by the terminal device may the same as or different from the mapping relationships between the measurement results and the timing advance values obtained by the network device. It is to be understood that the mapping relationships obtained by the terminal device may have an allowable error range with respect to the mapping relationships obtained by the network device.

Furthermore, the timing advance value obtained by the terminal device based on the mapping relationships and the measurement result for the first signal may be the same as or different from the timing advance value obtained by the network device based on the mapping relationships and the measurement result for the first signal.

Exemplarily, the timing advance value obtained by the terminal device by inputting the measurement result for the first signal into the second model may be the same as or different from the timing advance value obtained by the network device by inputting the measurement result for the first signal into the second model.

Furthermore, the second model used by the terminal device may be the same or different from the second model used by the network device, which is not limited in the embodiments of the present disclosure.

Exemplarily, the timing advance value obtained by the terminal device by inputting the measurement result for the first signal and the first information into the first model may be the same as or different from the timing advance value obtained by the network device by inputting the measurement result for the first signal and the first information into the first model.

Furthermore, the first model used by the terminal device may be the same or different from the first model used by the network device, which is not limited in the embodiments of the present disclosure.

In some embodiments, the operation that the network device sends, to the terminal device, second information used for indicating the timing advance value may include: the network device sends the second information to the terminal device based on a TA Command of the MAC CE, where the second information is used for indicating the timing advance value, and the timing advance value is an absolute timing advance value.

In some embodiments, the second information sent by the network device to the terminal device may further be used for indicating one or more of the followings:

a timing advance group of the first cell;
a timing advance group of the first spatial filter; and
a transmission configuration indication state of the first spatial filter.

Exemplarily, in a case where the second information is further used for indicating the timing advance group of the first cell and/or the timing advance group of the first spatial filter, a third schematic diagram of an adjustment format of a timing advance value may be as illustrated in FIG. 16. The MAC CE is encoded by taking 8 bits as one byte. The TAG ID has a length of 2 bits, the TA command has a length of 12 bits, Oct 1 represents one byte, Oct 2 represents one byte, i.e., each of the Oct 1 and Oct 2 has a length of 8 bits, and R represents setting to 0. In FIG. 16, when the number of first cells is one or more and/or the number of first spatial filters is one or more, the first cells and/or the first spatial filters are configured with one TAG.

Furthermore, FIG. 17 illustrates a fourth schematic diagram of an adjustment format of a timing advance value. In the case where the number of first cells is multiple and/or the number of first spatial filters is multiple, the first cells and/or the first spatial filters may be configured with different TAGs, and multiple such Industrial Engineering (IE) structures may be accumulated. As illustrated in FIG. 17, multiple TAGs and TA values corresponding to the multiple TAGs are included.

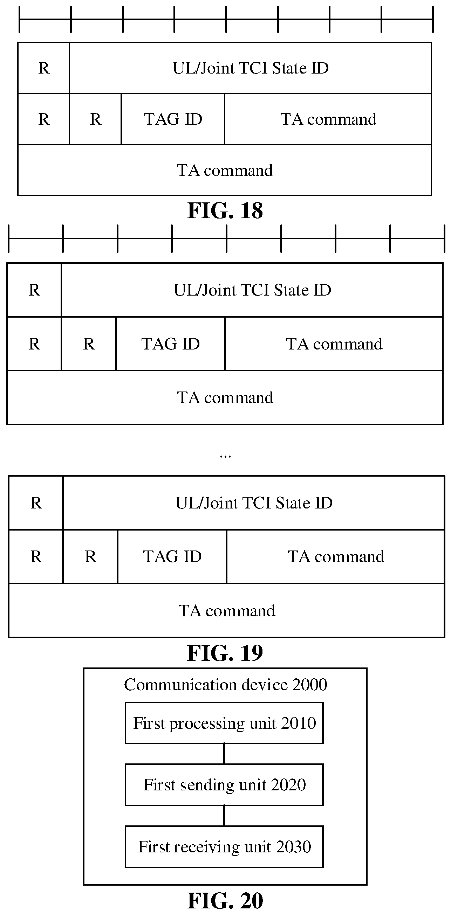

Exemplarily, in a case where the second information is further used for indicating the timing advance group of the first spatial filter and/or the transmission configuration indication state of the first spatial filter, a fifth schematic diagram of an adjustment format of a timing advance value may be as illustrated in FIG. 18. The transmission configuration indication state of the first spatial filter may be an Uplink/Joint Transmission Configuration Indication State (UL/Joint TCI State). The MAC CE is encoded by taking 8 bits as one byte. The TAG ID has a length of 2 bits, the TA command has a length of 12 bits, the UL/Joint TCI State ID has a length of 7 bits, and R represents setting to 0. In FIG. 18, in a case where the number of the first spatial filters is one or more, the first spatial filters are configured with one TAG.

Furthermore, FIG. 19 illustrates a sixth schematic diagram of an adjustment format of a timing advance value. In the case where the number of first spatial filters is multiple, the first spatial filters may be configured with different TAGs, and multiple such IE structures may be accumulated. As illustrated in FIG. 19, multiple TAGs and TA values corresponding to the multiple TAGs are included.

The embodiment of the present disclosure provides a communication method. The terminal device may acquire the measurement result for the first signal and send the measurement result for the first signal to the network device. The network device may determine the timing advance value of the first cell and/or the first spatial filter based on the measurement result for the first signal, and send the second information to the terminal device, where the second information is used for indicating the timing advance value. In this way, the network device indicates the timing advance value to the terminal device, so that the terminal device is able to obtain the timing advance value without sending the PRACH to the network device, thereby saving time-frequency resources and time overheads.

In the embodiment of the present disclosure, before acquiring the measurement result for the first signal, the terminal device may report the capability information of the terminal device to the network device, and/or the terminal device may receive a configuration and an indication from the network device. The terminal device may obtain the measurement result for the first signal based on the capability information of the terminal device, and/or based on the configuration and the indication of the network device; and then the terminal device may subsequently obtain the timing advance value of the first cell and/or the first spatial filter based on the measurement result for the first signal.

In some embodiments, the method further includes: terminal device sends the capability information of the terminal device to a network device, where the capability information of the terminal device represents that the terminal device supports acquiring the measurement result for the first signal, and/or supports determining the timing advance value of the first cell and/or the first spatial filter based on the measurement result for the first signal.

Accordingly, the network device may receive the capability information from the terminal device.

In some embodiments, the capability information of the terminal device may include one or more of the followings:

one or more measurement indicators supported by the terminal device, where the one or more measurement indicators are associated with the measurement result for the first signal;

a maximum number of resources of the first signal that the terminal device supports measuring;

a maximum number of candidate cells supported by the terminal device, where the candidate cells are cells for which the terminal device is able to determine a timing advance value based on the measurement result for the first signal, and the candidate cells include the first cell; and

a maximum number of candidate spatial filters supported by the terminal device, where the candidate spatial filters are spatial filters for which the terminal device is able to determine a timing advance value based on the measurement result for the first signal, and the candidate spatial filters include the first spatial filter.

It is to be noted that the one or more measurement indicators include a first measurement indicator, and the terminal device measures the first signal based on the first measurement indicator to obtain the measurement result for the first signal. For the description of obtaining the measurement result for the first signal by the terminal device based on the first measurement indicator, reference may be made to the description in the foregoing embodiment(s), which is not repeated herein.

It is further to be noted that in a case where the terminal device obtains the timing advance value of the first cell and/or the first spatial filter through the indication from the network device, since the network device itself is able to know the maximum number of candidate cells supported by the terminal device and the maximum number of candidate spatial filters supported by the terminal device, the capability information reported by the terminal device to the network device may include:

one or more measurement indicators supported by the terminal device, where the one or more measurement indicators are associated with the measurement result for the first signal; and

a maximum number of resources of the first signal that the terminal device supports measuring.

According to the method, the terminal device may send the capability information of the terminal device to the network device, and the network device may receive the capability information from the terminal device, so that the network device may subsequently perform more accurate configuration and indication for the terminal device by using the capability information of the terminal device, so that the terminal device is able to obtain the timing advance value based on the configuration and indication without sending the PRACH to the network device, thereby saving the resources and the time overheads.

In some embodiments, the method may further include: the network device sends third information to the terminal device, where the third information includes one or more of:

a first measurement indicator of the first signal, where the measurement result for the first signal is a measurement result corresponding to the first measurement indicator;

resource index information of the first signal;

index information of the second cell;

index information of the first cell; and

index information of the first spatial filter.

Accordingly, the terminal device may receive the third information from the network device.

Exemplarily, after the terminal device receives the first measurement indicator from the network device, the terminal device measures the first signal based on the first measurement indicator to obtain the measurement result for the first signal. Then, the terminal device may obtain the timing advance value of the first cell and/or the first spatial filter based on the measurement result for the first signal. In this way, the terminal device is able to obtain the timing advance value without sending the PRACH to the network device, thereby saving time-frequency resources and time overheads.

For the description of obtaining the timing advance value of the first cell and/or the first spatial filter by the terminal device based on the measurement result for the first signal, reference may be made to the aforementioned description for FIG. 10 to FIG. 19, which is not repeated herein.

It is further to be noted that in a case where the terminal device obtains the timing advance value of the first cell and/or the first spatial filter through the indication from the network device, since the network device itself is able to know the index information of the first cell and the index information of the first spatial filter, the third information sent by the network device to the terminal device may include one or more of the followings:

a first measurement indicator of the first signal, where the measurement result for the first signal is a measurement result corresponding to the first measurement indicator;
resource index information of the first signal; and
index information of the second cell.

The resource index information of the first signal and/or the index information of the second cell may be used for the network device to configure resources of the first signal.

According to the method, after the terminal device receives the third information from the network device, the terminal device may obtain the timing advance value of the first cell and/or the first spatial filter based on the third information. In this way, the terminal device is able to obtain the timing advance value without sending the PRACH to the network device, thereby saving time-frequency resources and time overheads.

In some embodiments, the third information is associated with the capability information of the terminal device.

Exemplarily, the network device may select one or more measurement indicators from one or more measurement indicators supported by the terminal device as the first measurement indicator.

Exemplarily, the network device may determine the resource index information of the first signal and/or the index information of the second cell based on the maximum number of resources of the first signal that the terminal device supports measuring.

Exemplarily, the network device may determine the index information of the first cell based on the maximum number of candidate cells supported by the terminal device.

Exemplarily, the network device may determine the index information of the first spatial filter based on the maximum number of candidate spatial filters supported by the terminal device.

According to the method, the network device may determine the third information based on the capability information of the terminal device, so as to perform more accurate configuration and indication for the terminal device.

Hereinafter, the communication method provided by the aforementioned embodiments will be described in detail with reference to specific application scenarios.

In the embodiments of the present disclosure, an AI/ML model may be used for predicting the TA value of a certain cell (i.e., the first cell) and/or an uplink spatial filter (i.e., the first spatial filter) of a certain cell by using a measurement of the downlink reference signal (i.e., the first signal) as an input of the model.

It is to be noted that the AI/ML model in the embodiments of the present disclosure may be deployed on the UE side or the NW side, thereby implementing the cell-specific and/or the spatial filter-specific TA prediction based on the downlink reference signal measurement. The technical solutions in the embodiments of the present disclosure mainly include the following six parts.

(1) According to the embodiment of the present disclosure, the TA prediction made by the AI/ML model deployed on the UE side may be implemented; the UE capability information may be reported during the process of the TA prediction; and the NW performs related configuration and indication (i.e., third information) according to the UE capability information.

(2) The UE may measure one or more of the L1-RSRP, downlink receive timing difference, CIR, and PDP of the downlink reference signal, to obtain the measurement result for the downlink reference signal; and the UE may use the measurement result for the downlink reference signal as the input of the AI/ML model. Alternatively, the UE may use the measurement result for the downlink reference signal and one or more of the followings as the inputs of the model:

resource index information of the downlink reference signal (i.e., the resource index information of the first signal);
index information of a cell to which the downlink reference signal belongs (i.e., index information of the second cell, e.g., the PCI);
index information of a cell for which the TA value is expected to be acquired (i.e., the index information of the first cell); and
index information of an uplink spatial filter for which the TA value is expected to be acquired (i.e., the index information of the first spatial filter).

(3) The output of the AI/ML model may be a TA prediction value of the index information of the cell for which the TA value is expected to be acquired and/or the index information of an uplink spatial filter for which the TA value is expected to be acquired. The UE may adjust by itself the TA value of a certain cell and/or a certain uplink spatial filter (i.e., the first cell and/or the first spatial filter) according to the TA prediction value.

(4) According to the embodiment of the present disclosure, the TA prediction made by the AI/ML model deployed on the NW side may be implemented; the UE capability information may be reported during the process of the TA prediction; and the NW performs related configuration and indication (i.e., third information) according to the UE capability information.

(5) The UE may measure one or more of the L1-RSRP, the downlink receive timing difference, the CIR, and the PDP of the downlink reference signal, and may report the measurement result to the NW in the format of the UCI.

(6) When the AI/ML model is deployed on the NW side, the NW may infer the TA value of a specific cell and/or a specific spatial filter (i.e., the first cell and/or the first spatial filter) according to the measurement result reported by the UE, and indicate the inferred TA value to the UE through an enhanced TA command.

In the embodiment of the present disclosure, through the AI/ML technology, the measurement result for the downlink reference signal is used as the input of the AI/ML model and the corresponding TA value is predicted through the AI/ML model. The cell-specific and/or beam-specific TA prediction may be supported in the mobility enhancement of NR or in the future 6G networks.

Based on whether the AI/ML model is deployed on the UE side or the NW side, the embodiments of the present disclosure may have two main embodiments, the corresponding signaling flow for supporting the TA prediction will be described below.

First embodiment: cell-specific and/or beam-specific TA prediction (the AI/ML model is deployed at the UE side).

(1) Reporting of the UE capability information

Before the NW configures the input required by the AI/ML model for the UE, the UE may inform, through the reporting of the capability information, the NW whether the UE supports the TA prediction based on the downlink reference signal measurement. If the UE supports the characteristic, the capability information reported by the UE may include one or more of the followings.

(i) For the TA prediction based on the downlink reference signal measurement, a measurement result of which measurement indicator (i.e. one or more measurement indicators supported) is supported by the UE as the model input. The measurement indicator supported by the UE may include one or more of the followings:

L1-RSRP-based measurement;
downlink arrival time difference-based measurement;
CIR-based measurement; and
PDP-based measurement.

(ii) For multiple cells (including the current serving cell and the candidate cell), how many downlink reference signal sources are supported by the UE for measurement at most (i.e., when the number of the second cells is multiple, the maximum number of resources of the first signal that the terminal device supports measuring).

The downlink reference signal may include the SSB and/or the CSI-RS.
The CSI-RS may include the CSI-RS for mobility.

(iii) In one cell, how many downlink reference signal resources are supported by the UE for measurement at most (i.e., in one of the second cells, the maximum number of resources of the first signal that the terminal device supports measuring).

(iv) TA predictions of how many cells and/or uplink spatial filters are supported by the UE at most (i.e. the maximum number of candidate cells supported by the terminal device).

(v) In one cell, the TA predictions of how many uplink spatial filters are supported by the UE for measurement at most (i.e. the maximum number of candidate spatial filters supported by the terminal device).

(2) Configuration and indication by the NW

According to the capability information reported by the UE, the NW may configure and/or activate the downlink reference signal resources (which may be in the form of a resource set) required by the input of the AI/ML model for the UE.

That is to say, the NW may configure SSB resources and/or CSI-RS resources of one or more cells (with different PCIs) (i.e., configuring the resource index information of the first signals and/or configuring index information of the second cells) for the measurement, and specify the measurement indicator (i.e., the first measurement indicator of the first signal).

According to the input of the AI/ML model, the NW may selectively indicate the index information (i.e., the index information of the first cell) of a cell for which the TA is expected to be acquired and/or the index information of (i.e., the index information of the first spatial filter)a uplink spatial filter for which the TA is expected to be acquired.

(3) Input and output of the AI/ML model

(i) The inputs of the AI/ML model may have the following options.

In an option 1, the inputs of the AI/ML model are the measurement result of the L1-RSRPs (i.e. multiple L1-RSRPs) of the downlink reference signal and one or more of the followings:

resource index information of the downlink reference signal (i.e., the resource index information of the first signal);
index information of a cell to which the downlink reference signal belongs (i.e., index information of the second cell, e.g., the PCI);
index information of a cell for which the TA value is expected to be acquired (i.e., the index information of the first cell); and
index information of an uplink spatial filter for which the TA value is expected to be acquired (i.e., the index information of the first spatial filter).

It is to be noted that only the L1-RSRP is necessary among the aforementioned inputs, and other information (e.g., the resource index information of the downlink reference signal) may be used as an option to be inputted into the AI/ML model according to different training methods of the model.

The corresponding scenario is illustrated in FIG. 8. The UE may measure the downlink reference signals (e.g., SSBs) of the cell #1 (that is a serving cell), the cell #2 (that is a candidate cell), and the cell #3 (that is a candidate cell). The measurement indicator is the L1-RSRP. The reception times (DL Reference Timing) of the downlink reference signals (that are SSB #1, SSB #2, and SSB #3, respectively) are used as the references (i.e., the starting points of the timing advance), the TA values corresponding to the cells and/or the uplink spatial filters (the first cells and/or the first spatial filters) are predicted by using the AI/ML model.

In an option 2, as illustrated in FIG. 9, the UE measures the receive timing difference (Time of Arrive, ToA) of the downlink reference signal. It is assumed that a certain downlink reference signal (such as the SSB #1 of the current serving cell) is used as a reference, and the receive timing difference (Rx Difference) between each of the reference signals (e.g., the SSB #2 and SSB #3) of other candidate cells and the reference signal (i.e., the SSB #1) is calculated.

The inputs of the AI/ML model are the measurement result of the receive timing difference of the downlink reference signal and one or more of the followings:

resource index information of the downlink reference signal (i.e., the resource index information of the first signal);
index information of a cell to which the downlink reference signal belongs (i.e., index information of the second cell, e.g., the PCI);
index information of a cell for which the TA value is expected to be acquired (i.e., the index information of the first cell); and
index information of an uplink spatial filter for which the TA value is expected to be acquired (i.e., the index information of the first spatial filter).

In an option 3, the UE measures the CIR of the downlink reference signal. The inputs of the AI/ML model are the measurement result of the CIR of the downlink reference signal and one or more of the followings:

resource index information of the downlink reference signal (i.e., the resource index information of the first signal);
index information of a cell to which the downlink reference signal belongs (i.e., index information of the second cell, e.g., the PCI);
index information of a cell for which the TA value is expected to be acquired (i.e., the index information of the first cell); and
index information of an uplink spatial filter for which the TA value is expected to be acquired (i.e., the index information of the first spatial filter).

In an option 4, the UE measures the PDP of the downlink reference signal. The inputs of the AI/ML model are the measurement result of the PDP of the downlink reference signal and one or more of the followings:

resource index information of the downlink reference signal (i.e., the resource index information of the first signal);
index information of a cell to which the downlink reference signal belongs (i.e., index information of the second cell, e.g., the PCI);
index information of a cell for which the TA value is expected to be acquired (i.e., the index information of the first cell); and
index information of an uplink spatial filter for which the TA value is expected to be acquired (i.e., the index information of the first spatial filter).

(ii) The output of the AI/ML model may have the following alternatives (Alt).
In the Alt 1, according to measured downlink cells, TA values of one or more of the downlink cells are predicted.
In the Alt 2, according to the index information of cells (of which TA values are expected to be acquired) that is inputted into the model, the TA values of one or more cells are predicted.
In the Alt 3, according to the measured downlink cells and/or the downlink reference signals of the cells, TA values corresponding to one or more uplink spatial filters in one or more cells are predicted.
In the Alt 4, according to the index information of cells (for which TA values are expected to be acquired) and/or the index information of the uplink spatial filters (for which TA values are expected to be acquired) that is inputted into the AI/ML model, the TA values corresponding to one or more uplink spatial filters in one or more cells are predicted.
It is to be noted that the implementation structure of the AI/ML model may be a combination of multiple input options and output alternatives.
Exemplarily, FIG. 11 is taken as an example, it is a combination of input option 1 and output Alt 1.
That is to say, the inputs of the AI/ML model are the measurement result of the L1-RSRPs of the downlink reference signal and one or more of the followings:

resource index information of the downlink reference signal;
index information of a cell to which the downlink reference signal belongs;
index information of a cell for which the TA value is expected to be acquired; and
index information of an uplink spatial filter for which the TA value is expected to be acquired.

The output of the AI/ML model is the predicted TA value of the measured downlink cell (i.e., the first cell).
Herein, the number of TA values may be one or more.
Exemplarily, FIG. 12 is taken as an example, it is a combination of input option 2 and output Alt 1.
That is to say, the inputs of the AI/ML model are the measurement result of the receive timing difference of the downlink reference signal and one or more of the followings:

resource index information of the downlink reference signal;
index information of a cell to which the downlink reference signal belongs;
index information of a cell for which the TA value is expected to be acquired; and
index information of an uplink spatial filter for which the TA value is expected to be acquired.

The output of the AI/ML model is the predicted TA value of the measured downlink cell (i.e., the first cell).
Herein, the number of TA values may be one or more.
It is to be understood that the structure of the AI/ML model adopted in the embodiments of the present disclosure is a DNN structure, but other complex model structures are not excluded in the embodiments of the present disclosure.
(4) The UE automatically adjusts the TA value according to the prediction from the AI/ML model prediction.
After the prediction made by the AI/ML model, the UE may automatically determine and adjust the TA value of the cell for which the TA value is expected to be acquired and/or the TA value of the uplink spatial filter for which the TA value is expected to be acquired.
The embodiment of the present disclosure provides a communication method, the UE does not need to send the PRACH to the NW, the NW does not need to estimate the uplink TA value of the UE, and the NW does not need to indicate the TA value to the UE through a signaling format such as the RAR or the MAC CE. In this way, a large amount of uplink PRACH resources can be saved and delay of the signaling interaction in the RACH procedure can be reduced.
In a second embodiment, the cell-specific and/or beam-specific TA prediction (the AI/ML model is deployed at the NW side).
For the NW-side model, the UE needs to report the measurement result for the downlink reference signal to the NW to be used as an input of the model.

(1) Reporting of the UE capability information

Before the NW configures the downlink measurement for the UE, the UE needs to inform, through capability reporting, the NW whether the UE supports downlink reference signal measurement for the TA prediction and reporting. If the UE supports the characteristic, the capability information reported by the UE may include one or more of the followings.

(i) Which measurement indicator is supported by the UE to perform downlink measurement and reporting. The measurement indicator supported by the UE may include one or more of the followings:

L1-RSRP-based measurement;
downlink arrival time difference-based measurement;
CIR-based measurement; and
PDP-based measurement.

(ii) For multiple cells (including the current serving cell and the candidate cell), how many downlink reference signal resources are supported by the UE for measurement at most (i.e., when the number of the second cells is multiple, the maximum number of resources of the first signal that the terminal device supports measuring).

The downlink reference signal may include the SSB and/or the CSI-RS.
The CSI-RS may include the CSI-RS for mobility.
(ii) In one cell, how many downlink reference signal resources are supported by the UE for measurement at most (i.e., in one of the second cells, the maximum number of resources of the first signal that the terminal device supports measuring).

(2) Configuration by the NW

According to the capability information reported by the UE, the NW may configure and/or activate the downlink reference signal resources (which may be in the form of a resource set) the required by the input of the AI/ML model for the UE. That is to say, the NW may configure SSB resources and/or CSI-RS resources of one or more cells (with different PCIs) (i.e., configuring the resource index information of the first signal and/or configuring index information of the second cell) for the measurement, and specify the measurement indicator (i.e., the first measurement indicator of the first signal).

(3) Input and output of the AI/ML model

The relationship between the input and the output when the AI/ML model is deployed on the NW side is similar to the relationship between the input and the output when the AI/ML model is deployed on the UE side. The difference between the deployment of the AI/ML model on the NW side and the deployment of the AI/ML model on the UE side is that when the AI/ML model is deployed on the NW side, the input required by the NW side is required to be reported through the measurement result of the UE.

(4) Measurement and reporting by the UE

For different input options of the AI/ML model, the UE may have different measurement behaviors and reporting.
In an option 1, for the measurement and reporting of the L1-RSRP of the downlink reference signal, the measurement behavior, measurement requirements and the reporting method of the UE are specified in the current NR protocol.
For the measurement for the mobility enhancement, the UE may measure the L1-RSRP of the downlink reference signal of the candidate cell (having a PCI different from the PCI of the serving cell), in addition to measuring the L1-RSRP of the downlink reference signal of the current serving cell.
In the reporting format, the measurement result of the L1-RSRP of the current serving cell and the measurement result of the L1-RSRP of the candidate cell may be reported in one reporting instance, and the reporting formats are illustrated in Table 1. The UE may report the measurement results of the L1-RSRPs of K cells, and each cell may be uniquely identified by the PCI or the PCI index. In one cell, the highest value of the L1-RSRP is selected as the reference for the differential reporting, and then CRI or SSBRI corresponding to the highest value is reported, and the L1-RSRPs of other reference signals are reported in the differential form.
It is to be noted that in the NR system, PCI itself is an ID having a length of 10 bits. To save the overheads of the reporting, the multiple PCIs may be further encoded. For example, eight PCIs that have been configured in advance may be further encoded into a PCI index having a length of 3 bits.

In an option 2, for the measurement and reporting of the receive timing difference of the downlink reference signal, there is no corresponding specification for the NR currently. The UE may use a specific downlink reference signal (e.g., the second signal) as a reference, to measure the receive timing difference of another downlink reference signal (e.g., the first signal) relative to the second signal. The specific downlink reference signal is obtained through one or more of the followings:

(1) obtaining based on RRC configuration;
(2) selecting by the UE from a serving cell; and
(3) obtaining from the DL/joint TCI state indicated by the NW.

The UE may report the receive timing difference by using the UCI, and the reporting format is illustrated in Table 2. In Table 2, the PCI or the PCI index may be used for indicating an index of a cell that is used as a reference of the downlink reception, and CRI/SSBRI may be used for indicating an index of the reference signal resource that is used as a reference of the downlink reception. The UE may report the receive timing differences of the downlink reference signal to the NW according to a fixed order for the downlink reference signal configured in advance by the NW (for example, an ascending order of the index information of the downlink reference signal resources; for another example, an ascending order of the indexes of the cells sorted according to the PCIs or PCI indexes).

In Table 3, resource index information of the downlink reference signal for each receive timing difference, and the cell (i.e., the PCI or the PCI index) to which the reference signal belongs are clearly given in the reporting format of the UE.

In an option 3, the UE measures the CIR or PDP of the downlink reference signal. Currently, this type of reporting is not supported in the NR protocol. The reporting formats are as illustrated in Table 4, and the UE may report the CIR or PDP of the downlink reference signal. The UE may also report the PCI or the PCI index of the target cell (i.e., the second cell) and/or the resource index of the reference signal (i.e., the first signal) corresponding to the cell. Table 4 illustrates the reported contents of one cell, and the reported contents of multiple cells may be obtained through superposition on this basis.

In addition, in Table 5, in order to further save the reporting overheads, the resource index of the reference signal may be omitted, and the UE may report the CIRs or the PDPs of the downlink reference signals in a fixed order. For example, the UE may report the CIRs or the PDPs of the downlink reference signals in the ascending order of the resource index information of the downlink reference signals.

(1) The NW indicates the TA value to the UE according to the model prediction result.

In an indication scheme 1, the NW indicates the TA values of one or more candidate cells (i.e., the first cell) to the UE. Based on the TA command of the MAC CE, the NW indicates the absolute value of the TA instead of the differential TA adjustment value. As illustrated in FIG. 16, the adjustment format of the TA value may be modified to: adding one TAG ID, which corresponds to a case where one or more candidate cells are configured in one TAG.

For the multiple candidate cells (that are in different TAGs, respectively), it may be considered to superimpose such multiple IE structures, and as illustrated in FIG. 17, the adjustment format of the TA value may include multiple TAGs and multiple corresponding TA values.

In an indication scheme 2, the NW indicates the TA values of one or more uplink spatial filters (i.e., first spatial filters) of one or more candidate cells (i.e., the first cell) to the UE. In the adjustment format of the TA value, the index information of the UL/joint TCI state of the associated uplink spatial filter is required to be indicated in addition to indicating the TAG ID. Specific formats are illustrated in FIG. 18 and FIG. 19, the adjustment format of the TA value in FIG. 18 corresponds to one TAG, and the adjustment format of the TA value in FIG. 19 corresponds to multiple TAGs.

The embodiment of the present disclosure provides a communication method, the UE can obtain the TA value from the indication of the NW without sending the PRACH to the NW. In this way, a large amount of uplink PRACH resources and time overheads can be saved.

Preferred implementations of the present disclosure have been described in detail above with reference to the accompanying drawings. However, the present disclosure is not limited to the specific details of the aforementioned implementations. Within the scope of the technical conception of the present disclosure, a variety of simple modifications may be made to the technical solution of the present disclosure, and such simple modifications shall fall within the scope of protection of the present disclosure. For example, various specific technical features described in the aforementioned specific embodiments may be combined in any suitable manner without contradiction, and various possible combinations are not further described in the present disclosure, in order to avoid unnecessary repetition. For another example, any combination may be made between various implementations of the present disclosure, as long as the combination does not depart from the idea of the present disclosure, and the combinations shall also be considered as the contents of the present disclosure. For another example, on the premise of no conflict, various embodiments described in the present disclosure and/or the technical features in the various embodiments may be combined with the related art in any manner.

The technical solutions obtained after the combination shall also fall within the scope of protection of the present disclosure.

It is further to be understood that in various method embodiments of the present disclosure, the sequence number(s) of the above processes do not imply the sequence(s) of execution, and the sequence of execution of each process should be determined according to the functions and internal logic thereof, and should not constitute any limitation on the implementation process of the embodiments of the present disclosure.

Based on the same inventive concepts as the aforementioned embodiments, FIG. 20 shows a schematic diagram of a composition structure of a communication device according to an embodiment of the present disclosure, and the communication device is applied to a terminal device. As illustrated in FIG. 20, the communication device 2000 may include a first processing unit 2010.

The first processing unit 2010 is configured to acquire a measurement result for a first signal, where the measurement result is used for determining a timing advance value of a first cell and/or a first spatial filter, and the first signal is a downlink reference signal related to a second cell and/or a second spatial filter.

In some embodiments, the first processing unit 2010 is further configured to determine the timing advance value of the first cell and/or the first spatial filter based on the measurement result.

In some embodiments, the first processing unit 2010 is further configured to input the measurement result and one or more of following information into a first model to determine the timing advance value of the first cell and/or the first spatial filter:

resource index information of the first signal;
index information of the second cell;
index information of the first cell; and
index information of the first spatial filter.

In some embodiments, as illustrated in FIG. 20, the communication device 2000 may further include a first sending unit 2020.

The first sending unit 2020 is configured to send the measurement result to the network device.

In some embodiments, the measurement result is carried by uplink control information.

In some embodiments, the first sending unit 2020 is further configured to send first information to the network device, where the first information and the measurement result are used for determining the timing advance value of the first cell and/or the first spatial filter, and the first information includes one or more of:

resource index information of the first signal;
index information of the second cell;
index information of the first cell; and
index information of the first spatial filter.

In some embodiments, as illustrated in FIG. 20, the communication device 2000 may further include a first receiving unit 2030.

The first receiving unit is configured to receive second information from the network device, where the second information is used for indicating the timing advance value of the first cell and/or the first spatial filter.

In some embodiments, the second information may further be used for indicating one or more of the followings:

a timing advance group of the first cell;
a timing advance group of the first spatial filter; and
a transmission configuration indication state of the first spatial filter.

In some embodiments, the first sending unit 2020 is further configured to send the capability information of the communication device 2000 to a network device, where the capability information of the communication device 2000 represents that the communication device 2000 supports acquiring the measurement result for the first signal, and/or supports determining the timing advance value of the first cell and/or the first spatial filter based on the measurement result.

In some embodiments, the capability information of the communication device 2000 may include one or more of the followings:

one or more measurement indicators supported by the communication device 2000, where the one or more measurement indicators are associated with the measurement result;
a maximum number of resources of the first signal that the communication device 2000 supports measuring.
a maximum number of candidate cells supported by the communication device 2000, where the candidate cells are cells for which the communication device 2000 is able to determine a timing advance value based on the measurement result, and the candidate cells include the first cell; and

a maximum number of candidate spatial filters supported by the communication device 2000, where the candidate spatial filters are spatial filters for which the communication device 2000 is able to determine a timing advance value based on the measurement result, and the candidate spatial filters include the first spatial filter.

In some embodiments, the first receiving unit 2030 is further configured to receive third information from a network device, where the third information includes one or more of:

a first measurement indicator of the first signal, where the measurement result is a measurement result corresponding to the first measurement indicator;
resource index information of the first signal;
index information of the second cell;
index information of the first cell; and
index information of the first spatial filter.

In some embodiments, the third information is associated with the capability information of the communication device 2000.
In some embodiments, the first measurement indicator includes one or more of the followings:

a receiving power of the first signal;
a receive timing difference of the first signal;
a channel impulse response of the first signal; and
a power delay profile of the first signal.

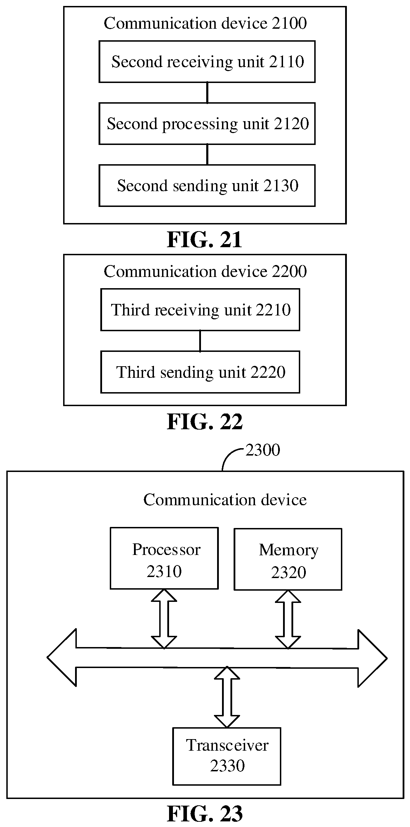

In some embodiments, the receive timing difference of the first signal is a difference between a reception time of the first signal and a reception time of a second signal, and the second signal is a downlink reference signal related to a third cell and/or a third spatial filter.
In some embodiments, the second signal is obtained based on a configuration of the network device and/or a preset rule.
In some embodiments, the first processing unit 2010 is further configured to communicate with the network device based on the timing advance value.
In some embodiments, the first signal includes an SSB and/or a CSI-RS.
The embodiments of the present disclosure provide a communication device. The terminal device acquires a measurement result for a first signal, where the measurement result for the first signal is used for determining a timing advance value of a first cell and/or a first spatial filter, and the first signal is a downlink reference signal related to a second cell and/or a second spatial filter. In this way, after obtaining the measurement result for the first signal, the terminal device may subsequently obtain the timing advance value of the first cell and/or the first spatial filter based on the measurement result, so that the terminal device is able to obtain the timing advance value without sending the PRACH to the network device, thereby saving time-frequency resources and time overheads.
Those skilled in the art will appreciate that the related descriptions of the aforementioned communication device in the embodiments of the present disclosure may be understood with reference to the descriptions of the aforementioned communication method in the embodiments of the present disclosure.
Based on the same inventive concepts as the aforementioned embodiments, FIG. 21 shows a schematic diagram of a composition structure of another communication device according to an embodiment of the present disclosure, and the communication device is applied to a network device. As illustrated in FIG. 21, the communication device 2100 may include a second receiving unit 2110.
The second receiving unit 2110 is configured to receive a measurement result for a first signal from a terminal device, where the measurement result is used for determining a timing advance value of a first cell and/or a first spatial filter, and the first signal is a downlink reference signal related to a second cell and/or a second spatial filter.
In some embodiments, as illustrated in FIG. 21, the communication device 2100 may further include a second processing unit 2120.
The second processing unit 2120 is further configured to determine the timing advance value of the first cell and/or the first spatial filter based on the measurement result.
In some embodiments, the second processing unit 2120 is further configured to input the measurement result and first information into a first model to determine the timing advance value of the first cell and/or the first spatial filter, where the first information includes one or more of:

resource index information of the first signal;
index information of the second cell;
index information of the first cell; and
index information of the first spatial filter.

In some embodiments, the first information may be sent by the terminal device.

In some embodiments, the measurement result is carried by uplink control information.

In some embodiments, as illustrated in FIG. 21, the communication device 2100 may further include a second sending unit 2130.

The second sending unit 2130 is configured to send second information to the terminal device, where the second information is used for indicating the timing advance value of the first cell and/or the first spatial filter.

In some embodiments, the second information may further be used for indicating one or more of the followings:

a timing advance group of the first cell;
a timing advance group of the first spatial filter; and
a transmission configuration indication state of the first spatial filter.

In some embodiments, the second receiving unit 2110 is configured to receive capability information of a terminal device, where the capability information of the terminal device represents that the terminal device supports acquiring a measurement result, and/or supports determining a timing advance value of a first cell and/or a first spatial filter based on the measurement result.

In some embodiments, the capability information of the terminal device includes one or more of the followings:

one or more measurement indicators supported by the terminal device, where the one or more measurement indicators are associated with the measurement result;
a maximum number of resources of the first signal that the terminal device supports measuring;
a maximum number of candidate cells supported by the terminal device, where the candidate cells are cells for which the terminal device is able to determine a timing advance value based on the measurement result, and the candidate cells include the first cell; and
a maximum number of candidate spatial filters supported by the terminal device, where the candidate spatial filters are spatial filters for which the terminal device is able to determine a timing advance value based on the measurement result, and the candidate spatial filters include the first spatial filter.

In some embodiments, the second sending unit 2130 is further configured to send third information to the terminal device, where the third information includes one or more of:

a first measurement indicator of the first signal, where the measurement result is a measurement result corresponding to the first measurement indicator;
resource index information of the first signal;
index information of the second cell;
index information of the first cell; and
index information of the first spatial filter.

In some embodiments, the third information is associated with the capability information of the terminal device.

In some embodiments, the first measurement indicator includes one or more of the followings:

a receiving power of the first signal;
a receive timing difference of the first signal;
a channel impulse response of the first signal; and
a power delay profile of the first signal.

In some embodiments, the receive timing difference of the first signal is a difference between a reception time of the first signal and a reception time of a second signal, and the second signal is a downlink reference signal related to a third cell and/or a third spatial filter.

In some embodiments, the second signal is obtained based on a configuration of the network device and/or a preset rule.

In some embodiments, the first signal includes an SSB and/or a CSI-RS.

The embodiments of the present disclosure provide a communication device. The network device may receive a measurement result for a first signal from a terminal device, where the measurement result is used for determining a timing advance value of a first cell and/or a first spatial filter, and the first signal is a downlink reference signal related to a second cell and/or a second spatial filter. In this way, after the network device acquires the measurement result for the first signal, the network device may obtain the timing advance value of the first cell and/or the first spatial filter based on the measurement result; then the network device subsequently indicates the timing advance value to the terminal device, so that the terminal device is able to obtain the timing advance value without sending the PRACH to the network device, thereby saving time-frequency resources and time overheads.

Those skilled in the art will appreciate that the related descriptions of the aforementioned communication device in the embodiments of the present disclosure may be understood with reference to the descriptions of the aforementioned communication method in the embodiments of the present disclosure.

Based on the same inventive concepts as the aforementioned embodiments, FIG. 22 shows a schematic diagram of a composition structure of another communication device according to an embodiment of the present disclosure, and the communication device is applied to a network device. As illustrated in FIG. 22, the communication device 2200 may include a third receiving unit 2210.

The third receiving unit 2210 is configured to receive capability information of a terminal device, where the capability information of the terminal device represents that the terminal device supports acquiring a measurement result for a first signal, and/or supports determining a timing advance value of a first cell and/or a first spatial filter based on the measurement result, the first signal being a downlink reference signal related to a second cell and/or a second spatial filter.

In some embodiments, the capability information of the terminal device includes one or more of the followings:

one or more measurement indicators supported by the terminal device, where the one or more measurement indicators are associated with the measurement result;
a maximum number of resources of the first signal that the terminal device supports measuring;
a maximum number of candidate cells supported by the terminal device, where the candidate cells are cells for which the terminal device is able to determine a timing advance value based on the measurement result, and the candidate cells include the first cell; and
a maximum number of candidate spatial filters supported by the terminal device, where the candidate spatial filters are spatial filters for which the terminal device is able to determine a timing advance value based on the measurement result, and the candidate spatial filters include the first spatial filter.

In some embodiments, as illustrated in FIG. 22, the communication device 2200 may further include a third sending unit 2220.

The third sending unit 2220 is configured to send third information to the terminal device, where the third information includes one or more of:

a first measurement indicator of the first signal, where the measurement result is a measurement result corresponding to the first measurement indicator;
resource index information of the first signal;
index information of the second cell;
index information of the first cell; and
index information of the first spatial filter.

In some embodiments, the third information is associated with the capability information of the terminal device.

In some embodiments, the first measurement indicator includes one or more of the followings:

a receiving power of the first signal;
a receive timing difference of the first signal;
a channel impulse response of the first signal; and
a power delay profile of the first signal.

In some embodiments, the receive timing difference of the first signal is a difference between a reception time of the first signal and a reception time of a second signal, and the second signal is a downlink reference signal related to a third cell and/or a third spatial filter.

In some embodiments, the second signal is obtained based on a configuration of the network device and/or a preset rule.

In some embodiments, the first signal includes an SSB and/or a CSI-RS.

The embodiments of the present disclosure provide a communication device. The network device may receive capability information of a terminal device, where the capability information of the terminal device represents that the terminal device supports acquiring a measurement result for a first signal, and/or supports determining a timing advance value of a first cell and/or a first spatial filter based on the measurement result, the first signal being a downlink reference signal related to a second cell and/or a second spatial filter. In this way, the network device may subsequently perform more accurate configuration and indication for the terminal device by using the capability information of the terminal device, so that the terminal device is able to obtain the timing advance value based on the configuration and indication without sending the PRACH to the network device, thereby saving the resources and the time overheads.

Those skilled in the art will appreciate that the related descriptions of the aforementioned communication device in the embodiments of the present disclosure may be understood with reference to the descriptions of the aforementioned communication method in the embodiments of the present disclosure.

FIG. 23 is a schematic structural diagram of a communication device 2300 according to an embodiment of the present disclosure. As illustrated in FIG. 23, the communication device 2300 includes a processor 2310 and a memory 2320. The memory 2320 may be configured to store a computer program, and the processor 2310 may be configured to invoke and execute the computer program stored in the memory to perform the method according to the embodiments of the present disclosure.

Herein, the memory 2320 may be a separate device independent of the processor 2310, or may be integrated into the processor 2310.

In some embodiments, as illustrated in FIG. 23, the communication device 2300 may further include a transceiver 2330. The processor 2310 may control the transceiver 2330 to communicate with other devices. Specifically, the transceiver 2330 may transmit information or data to other devices, or receive information or data from other devices.

Herein, the transceiver 2330 may include a transmitter and a receiver. The transceiver 2330 may further include one or more antennas.

In some embodiments, the embodiment of the present disclosure further provides a composition of another communication device, where the communication device may include the communication device 2000, the communication device 2100, or the communication device 2200 described in any of the aforementioned embodiments.

In some embodiments, the communication device may be the terminal device in the embodiments of the present disclosure. The processor 2310 may invoke and execute the computer program from the memory 2320 to implement the method implemented by the terminal device in the embodiments of the present disclosure. For brevity, details are not elaborated herein again.

In some embodiments, the communication device may be the network device in the embodiments of the present disclosure. The processor 2310 may invoke and execute the computer program from the memory 2320 to implement the method implemented by the network device in the embodiments of the present disclosure. For brevity, details are not elaborated herein again.

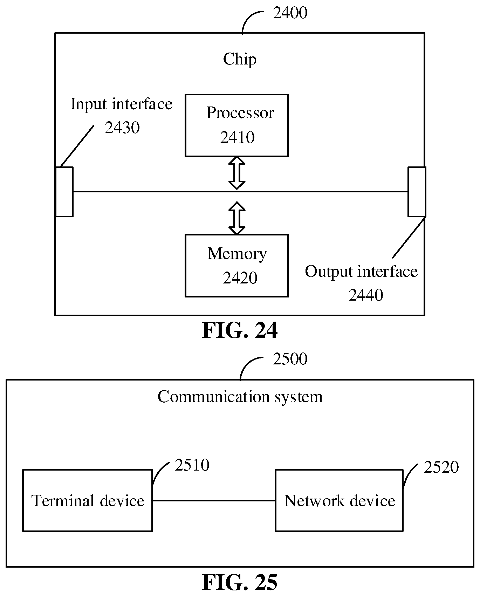

FIG. 24 is a schematic structural diagram of a chip according to an embodiment of the present disclosure. As illustrated in FIG. 24, the chip 2400 includes a processor 2410. The processor 2410 may be configured to invoke and execute a computer program stored from a memory to implement the method in the embodiments of the present disclosure.

Optionally, as illustrated in FIG. 24, the chip 2400 may further include a memory 2420. Herein, the processor 2410 may be configured to invoke and execute the computer program stored in the memory 2420 to perform each of the methods according to the embodiments of the present disclosure.

Herein, the memory 2420 may be a separate device independent of the processor 2410, or may be integrated into the processor 2410.

In some embodiments, the chip 2400 may further include an input interface 2430. Herein, the processor 2410 may control the input interface 2430 to communicate with other devices or chips. Specifically, the input interface 2430 may obtain information or data from other devices or chips.

In some embodiments, the chip 2400 may further include an output interface 2440. Herein, the processor 2410 may control the output interface 2440 to communicate with other devices or chips. Specifically, the output interface 2440 may output information or data to other devices or chips.

Optionally, the chip may be applied to the network device in the embodiments of the present disclosure. For brevity, details are not elaborated herein again.

Optionally, the chip may be applied to the terminal device in the embodiments of the present disclosure. For brevity, details are not elaborated herein again.

It should be understood that, the chip referred to in the embodiments of the present disclosure may also be referred to as a system-level chip, a system chip, a chip system, or a system-on-chip, etc.

FIG. 25 is a schematic block diagram of a communication system 2500 according to an embodiment of the present disclosure. As illustrated in FIG. 25, the communication system 2500 includes a terminal device 2510 and a network device 2520.

Herein, the terminal device 2510 may be configured to implement the corresponding functions implemented by the terminal device in the foregoing methods. The network device 2520 may be configured to implement the corresponding functions implemented by the network device in the foregoing methods. For brevity, details are not elaborated herein again.

It is to be understood that the processor in the embodiments of the present disclosure may be an integrated circuit chip with signal processing capacity. In the implementation process, various operations of the above method embodiments may be completed by integrated logic circuits of hardware in the processor or instructions in the form of software. The above processor may be a general-purpose processor, a Digital Signal Processor (DSP), an Application Specific Integrated Circuit (ASIC), a Field Programmable Gate Array (FPGA), or other programmable logic devices, discrete gate or transistor logic devices, and discrete hardware components. Various methods, steps, and logical block diagrams disclosed in the embodiments of the disclosure may be implemented or performed. The general-purpose processor may be a microprocessor, any conventional processor, or the like. Steps of the methods disclosed with reference to the embodiments of the disclosure may be directly performed and accomplished by a hardware decoding processor, or may be performed and accomplished by a combination of hardware and software modules in the decoding processor. The software modules may be located in a mature storage medium in the art, such as a random access memory, a flash memory, a read-only memory, a programmable read-only memory or electrically erasable programmable memory, or a register. The storage medium is located in the memory, and the processor reads information in the memory and completes the steps in the foregoing methods in combination with hardware of the processor.

It is to be understood that the memory in the embodiments of the present disclosure may be a volatile memory or a non-volatile memory, or may include both the volatile memory and the non-volatile memory. The non-volatile memory may be an ROM, a Programmable ROM (PROM), an Erasable PROM (EPROM), an Electrically EPROM (EEPROM) or a flash memory. The volatile memory may be a Random Access Memory (RAM) and is used as an external highspeed cache. It is exemplarily but unlimitedly described that RAMs in various forms may be adopted, such as a static RAM (SRAM), a dynamic RAM (DRAM), a Synchronous DDRAM (SDRAM), a double data rate SDRAM (DDR SDRAM), an Enhanced SDRAM (ESDRAM), a Synchlink DRAM (SLDRAM) and a Direct Rambus RAM (DR RAM). It is to be noted that the memory described in this specification includes but is not limited to these and any other proper types of memories.

It is to be understood that the abovementioned memories are exemplary but not restrictive, for example, the memory in the embodiments of the disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a Direct Rambus RAM (DR RAM). That is to say, the memories described in the embodiment of the disclosure are intended to include, but not limited to, these and any other suitable types of memories.

An embodiment of the present disclosure further provides a computer-readable storage medium configured to store a computer program.

In some embodiments, the computer-readable storage medium may be applied to the terminal device in the embodiments of the present disclosure, and the computer program, when executed by at least one processor, implements the corresponding processes implemented by the terminal device in various methods of the embodiments of the present disclosure. For brevity, details are not described herein again.

In some embodiments, the computer-readable storage medium may be applied to the network device in the embodiments of the present disclosure, and the computer program, when executed by at least one processor, implements the corresponding processes implemented by the network device in various methods of the embodiments of the present disclosure. For brevity, details are not described herein again.

An embodiment of the present disclosure further provides a computer program product, which includes computer program instructions.

In some embodiments, the computer program product may be applied to the terminal device in the embodiments of the present disclosure, and the computer program instructions cause a computer to perform the corresponding processes performed by the terminal device in various methods of the embodiments of the present disclosure. For brevity, details are not described herein again.

In some embodiments, the computer program product may be applied to the network device in the embodiments of the present disclosure, and the computer program instructions cause a computer to perform the corresponding processes performed by the network device in various methods of the embodiments of the present disclosure. For brevity, details are not described herein again.

An embodiment of the present disclosure further provides a computer program.

In some embodiments, the computer program may be applied to the terminal device in the embodiments of the present disclosure, and the computer program, when is run on a computer, causes the computer to perform the corresponding processes performed by the terminal device in various methods of the embodiments of the present disclosure. For brevity, details are not described herein again.

In some embodiments, the computer program may be applied to the network device in the embodiments of the present disclosure, and the computer program, when is run on a computer, causes the computer to perform the corresponding processes performed by the network device in various methods of the embodiments of the present disclosure. For brevity, details are not described herein again.

Those of ordinary skill in the art may realize that units and algorithm steps of various examples described in combination with the embodiments disclosed in the present disclosure herein may be implemented by electronic hardware, or a combination of computer software and electronic hardware. Whether the functions are executed in a hardware or software manner depends on specific applications and design constraints of the technical solutions. Professionals may implement the described functions for each specific application by using different methods, but such implementations shall not be regarded as outside the scope of the present disclosure.

It may be clearly understood by those skilled in the art that, for the specific working processes of the aforementioned apparatuses and units, reference may be made to the corresponding processes in the aforementioned method embodiments, and such specific working processes of the systems, devices and units are not described herein again for the purpose of convenient and brief description

In the several embodiments provided in the present disclosure, it is to be understood that the disclosed devices and method may be implemented in other modes. For example, the device embodiments described above are only schematic, and for example, division of the units is only logic function division, and other division manners may be adopted during practical implementation. For example, multiple units or components may be combined or integrated into another system, or some characteristics may be neglected or not executed. In addition, the displayed or discussed mutual couplings or direct couplings or communication connections may be implemented by using some interfaces. The indirect couplings or communication connections between the devices or units may be implemented in electronic, mechanical, or other forms.

The units described as separate components may or may not be physically separated, and the components displayed as units may or may not be physical units, and may be located in one place or may be distributed over multiple network units. Some or all of the units may be selected according to actual needs to achieve the objectives of the solutions of the embodiments of the present disclosure.

In addition, functional units in various embodiments of the disclosure may be integrated into one processing unit, or each of the units may be physically separated, or two or more units may be integrated into one unit.

If the function is implemented in the form of a software functional unit and sold or used as an independent product, it may also be stored in a computer-readable storage medium. Based on this understanding, the technical solutions of the disclosure essentially or the parts that contribute to the prior art, or part of the technical solutions can be embodied in the form of a software product. The computer software product is stored in a storage medium, including multiple instructions for causing a computer device (which may be a personal computer, a server, or a network device, and the like) to execute all or part of the steps of the methods described in various embodiments of the disclosure. The aforementioned storage medium includes various media capable of storing a program code such as a USB disk, a mobile hard drive disk, a Read-Only Memory (ROM), a Random Access Memory (RAM), a magnetic disk or an optical disk.

It is to be noted that, in the present disclosure, the terms "include", "contain" or any other variation thereof, are intended to cover a non-exclusive inclusion, such that a process, method, article, or device that includes a list of elements includes not only those elements but also other elements not expressly listed, or also includes elements inherent to such process, method, article, or device. Without more limitations, an element is defined by the statement "including a..." that does not rule out there are additional identical elements in a process, method, article, or apparatus that includes the element.

The aforementioned embodiment numbers of the present disclosure are for the purpose of description only and do not represent the advantages or disadvantages of the embodiments

The methods disclosed in several method embodiments provided in the present disclosure can be arbitrarily combined without conflict to obtain new method embodiments.

The features disclosed in several product embodiments provided in the present disclosure can be arbitrarily combined without conflict to obtain new product embodiments.

The features disclosed in several methods or device embodiments provided in the present disclosure can be arbitrarily combined without conflict to obtain new method embodiments or device embodiments.

The foregoing contents are only the specific implementations of the present disclosure, but the scope of protection of the disclosure is not limited thereto. Any variation or replacement readily figured out by a person skilled in the art within the technical scope disclosed in the disclosure shall fall within the scope of protection of the disclosure. Therefore, the scope of protection of the disclosure is defined by the scope of protection of the claims.

**Claims**

1. A communication method, comprising:
   acquiring, by a terminal device, a measurement result for a first signal, wherein the measurement result is used for determining a timing advance value of a first cell and/or a first spatial filter, and the first signal is a downlink reference signal related to a second cell and/or a second spatial filter.

**2.** The method of claim 1, further comprising:
determining, by the terminal device, the timing advance value of the first cell and/or the first spatial filter based on the measurement result.

**3.** The method of claim 2, wherein determining, by the terminal device, the timing advance value of the first cell and/or the first spatial filter based on the measurement result comprises:
inputting, by the terminal device, the measurement result and one or more of following information into a first model to determine the timing advance value of the first cell and/or the first spatial filter:

> resource index information of the first signal;
> index information of the second cell;
> index information of the first cell; and
> index information of the first spatial filter.

**4.** The method of claim 1, further comprising:
sending, by the terminal device, the measurement result to a network device.

**5.** The method of claim 4, wherein the measurement result is carried by uplink control information.

**6.** The method of claim 4 or 5, further comprising:
sending, by the terminal device, first information to the network device, wherein the first information and the measurement result are used for determining the timing advance value of the first cell and/or the first spatial filter, and the first information comprises one or more of:

> resource index information of the first signal;
> index information of the second cell;
> index information of the first cell; and
> index information of the first spatial filter.

**7.** The method of any one of claims 4 to 6, further comprising:
receiving, by the terminal device, second information from the network device, wherein the second information is used for indicating the timing advance value of the first cell and/or the first spatial filter.

**8.** The method of claim 7, wherein the second information is further used for indicating one or more of:

> a timing advance group of the first cell;
> a timing advance group of the first spatial filter; and
> a transmission configuration indication state of the first spatial filter.

**9.** The method of any one of claims 1 to 8, further comprising:
sending, by the terminal device, capability information of the terminal device to a network device, wherein the capability information of the terminal device represents that the terminal device supports acquiring the measurement result, and/or supports determining the timing advance value of the first cell and/or the first spatial filter based on the measurement result.

**10.** The method of claim 9, wherein the capability information of the terminal device comprises one or more of:

> one or more measurement indicators supported by the terminal device, wherein the one or more measurement indicators are associated with the measurement result;
> a maximum number of resources of the first signal that the terminal device supports measuring;
> a maximum number of candidate cells supported by the terminal device, wherein the candidate cells are cells for which the terminal device is able to determine a timing advance value based on the measurement result, and the candidate cells comprise the first cell; and
> a maximum number of candidate spatial filters supported by the terminal device, wherein the candidate spatial filters are spatial filters for which the terminal device is able to determine a timing advance value based on the measurement result, and the candidate spatial filters comprise the first spatial filter.

**11.** The method of any one of claims 1 to 10, further comprising:

receiving, by the terminal device, third information from a network device, wherein the third information comprises one or more of:

a first measurement indicator of the first signal, wherein the measurement result is a measurement result corresponding to the first measurement indicator;
resource index information of the first signal;
index information of the second cell;
index information of the first cell; and
index information of the first spatial filter.

12. The method of claim 11, wherein the third information is associated with capability information of the terminal device.

13. The method of claim 11 or 12, wherein the first measurement indicator comprises one or more of:

a receiving power of the first signal;
a receive timing difference of the first signal;
a channel impulse response of the first signal; and
a power delay profile of the first signal.

14. The method of claim 13, wherein the receive timing difference of the first signal is a difference between a reception time of the first signal and a reception time of a second signal, and the second signal is a downlink reference signal related to a third cell and/or a third spatial filter.

15. The method of claim 14, wherein the second signal is obtained based on a configuration of a network device and/or a preset rule.

16. The method of any one of claims 1 to 15, further comprising:
communicating, by the terminal device, with a network device based on the timing advance value.

17. The method of any one of claims 1 to 16, wherein the first signal comprises a Synchronization Signal Block (SSB) and/or a Channel State Information-Reference Signal (CSI-RS).

18. A communication method, comprising:
receiving, by a network device, a measurement result for a first signal from a terminal device, wherein the measurement result is used for determining a timing advance value of a first cell and/or a first spatial filter, and the first signal is a downlink reference signal related to a second cell and/or a second spatial filter.

19. The method of claim 18, further comprising:
determining, by the network device, the timing advance value of the first cell and/or the first spatial filter based on the measurement result.

20. The method of claim 19, wherein determining, by the network device, the timing advance value of the first cell and/or the first spatial filter based on the measurement result comprises:
inputting, by the network device, the measurement result and first information into a first model to determine the timing advance value of the first cell and/or the first spatial filter, wherein the first information comprises one or more of:

resource index information of the first signal;
index information of the second cell;
index information of the first cell; and
index information of the first spatial filter.

21. The method of claim 20, wherein the first information is sent by the terminal device.

22. The method of any one of claims 18 to 21, wherein the measurement result is carried by uplink control information.

23. The method of any one of claims 18 to 22, further comprising:
sending, by the network device, second information to the terminal device, wherein the second information is used for indicating the timing advance value of the first cell and/or the first spatial filter.

24. The method of claim 23, wherein the second information is further used for indicating one or more of:

   a timing advance group of the first cell;
   a timing advance group of the first spatial filter; and
   a transmission configuration indication state of the first spatial filter.

25. The method of any one of claims 18 to 24, further comprising:
   receiving, by the network device, capability information of the terminal device, wherein the capability information of the terminal device represents that the terminal device supports acquiring the measurement result, and/or supports determining the timing advance value of the first cell and/or the first spatial filter based on the measurement result.

26. The method of claim 25, wherein the capability information of the terminal device comprises one or more of:

   one or more measurement indicators supported by the terminal device, wherein the one or more measurement indicators are associated with the measurement result;
   a maximum number of resources of the first signal that the terminal device supports measuring;
   a maximum number of candidate cells supported by the terminal device, wherein the candidate cells are cells for which the terminal device is able to determine a timing advance value based on the measurement result, and the candidate cells comprise the first cell; and
   a maximum number of candidate spatial filters supported by the terminal device, wherein the candidate spatial filters are spatial filters for which the terminal device is able to determine a timing advance value based on the measurement result, and the candidate spatial filters comprise the first spatial filter.

27. The method of any one of claims 18 to 26, further comprising:
   sending, by the network device, third information to the terminal device, wherein the third information comprises one or more of:

   a first measurement indicator of the first signal, wherein the measurement result is a measurement result corresponding to the first measurement indicator;
   resource index information of the first signal;
   index information of the second cell;
   index information of the first cell; and
   index information of the first spatial filter.

28. The method of claim 27, wherein the third information is associated with capability information of the terminal device.

29. The method of claim 27 or 28, wherein the first measurement indicator comprises one or more of:

   a receiving power of the first signal;
   a receive timing difference of the first signal;
   a channel impulse response of the first signal; and
   a power delay profile of the first signal.

30. The method of claim 29, wherein the receive timing difference of the first signal is a difference between a reception time of the first signal and a reception time of a second signal, and the second signal is a downlink reference signal related to a third cell and/or a third spatial filter.

31. The method of claim 30, wherein the second signal is obtained based on a configuration of the network device and/or a preset rule.

32. The method of any one of claims 18 to 31, wherein the first signal comprises a Synchronization Signal Block (SSB) and/or a Channel State Information-Reference Signal (CSI-RS).

33. A communication method, comprising:
   receiving, by a network device, capability information of a terminal device, wherein the capability information of the terminal device represents that the terminal device supports acquiring a measurement result for a first signal, and/or supports determining a timing advance value of a first cell and/or a first spatial filter based on the measurement result, the first signal being a downlink reference signal related to a second cell and/or a second spatial filter.

34. The method of claim 33, wherein the capability information of the terminal device comprises one or more of:

    one or more measurement indicators supported by the terminal device, wherein the one or more measurement indicators are associated with the measurement result;
    a maximum number of resources of the first signal that the terminal device supports measuring;
    a maximum number of candidate cells supported by the terminal device, wherein the candidate cells are cells for which the terminal device is able to determine a timing advance value based on the measurement result, and the candidate cells comprise the first cell; and
    a maximum number of candidate spatial filters supported by the terminal device, wherein the candidate spatial filters are spatial filters for which the terminal device is able to determine a timing advance value based on the measurement result, and the candidate spatial filters comprise the first spatial filter.

35. The method of claim 33 or 34, further comprising:
sending, by the network device, third information to the terminal device, wherein the third information comprises one or more of:

    a first measurement indicator of the first signal, wherein the measurement result is a measurement result corresponding to the first measurement indicator;
    resource index information of the first signal;
    index information of the second cell;
    index information of the first cell; and
    index information of the first spatial filter.

36. The method of claim 35, wherein the third information is associated with capability information of the terminal device.

37. The method of claim 35 or 36, wherein the first measurement indicator comprises one or more of:

    a receiving power of the first signal;
    a receive timing difference of the first signal;
    a channel impulse response of the first signal; and
    a power delay profile of the first signal.

38. The method of claim 37, wherein the receive timing difference of the first signal is a difference between a reception time of the first signal and a reception time of a second signal, and the second signal is a downlink reference signal related to a third cell and/or a third spatial filter.

39. The method of claim 38, wherein the second signal is obtained based on a configuration of the network device and/or a preset rule.

40. The method of any one of claims 33 to 39, wherein the first signal comprises a Synchronization Signal Block (SSB) and/or a Channel State Information-Reference Signal (CSI-RS).

41. A communication device, comprising:
a first processing unit, configured to acquire a measurement result for a first signal, wherein the measurement result is used for determining a timing advance value of a first cell and/or a first spatial filter, and the first signal is a downlink reference signal related to a second cell and/or a second spatial filter.

42. A communication device, comprising:
a second receiving unit, configured to receive a measurement result for a first signal from a terminal device, wherein the measurement result is used for determining a timing advance value of a first cell and/or a first spatial filter, and the first signal is a downlink reference signal related to a second cell and/or a second spatial filter.

43. A communication device, comprising:
a third receiving unit, configured to receive capability information of a terminal device, wherein the capability information of the terminal device represents that the terminal device supports acquiring a measurement result for a first signal, and/or supports determining a timing advance value of a first cell and/or a first spatial filter based on the measurement result, the first signal being a downlink reference signal related to a second cell and/or a second spatial filter.

44. A communication apparatus, comprising: a processor and a memory, wherein the memory is configured to store a computer program and the processor is configured to invoke and execute the computer program stored in the memory, to perform the method of any one of claims 1 to 17, or perform the method of any one of claims 18 to 32, or perform the method of any one of claims 33 to 40.

45. A chip, comprising: a processor configured to invoke and execute a computer program from a memory, to cause a device on which the chip is mounted to perform the method of any one of claims 1 to 17, or perform the method of any one of claims 18 to 32, or perform the method of any one of claims 33 to 40.

46. A computer-readable storage medium having stored thereon a computer program that, when executed by at least one processor, performs the method of any one of claims 1 to 17, or performs the method of any one of claims 18 to 32, or implements the method of any one of claims 33 to 40.

47. A computer program product, comprising computer program instructions, wherein the computer program instructions cause a computer to perform the method of any one of claims 1 to 17, or perform the method of any one of claims 18 to 32, or perform the method of any one of claims 33 to 40.

48. A computer program, wherein the computer program causes a computer to perform the method of any one of claims 1 to 17, or perform the method of any one of claims 18 to 32, or perform the method of any one of claims 33 to 40.

| TAG ID | TA command | Oct 1 |

**FIG. 1**

| R | R | R | R | TA command | Oct 1 |
| TA command | | | | | Oct 2 |

**FIG. 2**

| R | TA command | Oct 1 |
| TA command | Uplink grant | Oct 2 |
| Uplink grant | | Oct 3 |
| Uplink grant | | Oct 4 |
| Uplink grant | | Oct 5 |
| Temporary C-RNTI | | Oct 6 |
| Temporary C-RNTI | | Oct 7 |

**FIG. 3**

| Downlink frame i |

| Uplink frame i |

$$( N_{TA} + N_{TA,offset} )*T_c$$

**FIG. 4**

**FIG. 5**

Input layer

Output layer

Hidden layer

**FIG. 6**

| A terminal device acquires a measurement result for a first signal, where the measurement result is used for determining a timing advance value of a first cell and/or a first spatial filter, and the first signal is a downlink reference signal related to a second cell and/or a second spatial filter |
|---|

S710

**FIG. 7**

Cell #1

SSB #1

TA #1
Reception
time

SSB #2

TA #2
Reception
time

Cell #2

Cell #3

SSB #3

TA #3
Reception
time

**FIG. 8**

Cell #1

SSB #1

TA #1

Reception time

Cell #3

SSB #1
SSB #3

Difference between the reception time of the SSB #3 and the reception time of the SSB #1

TA #3

Reception time

SSB #1
SSB #2

Difference between the reception time of the SSB #2 and the reception time of the SSB #1

TA #2

Reception time

Cell #2

**FIG. 9**

The terminal device acquires a measurement result for a first signal — S1010

The terminal device determines a timing advance value of a first cell and/or a first spatial filter based on the measurement result for the first signal — S1020

**FIG. 10**

Neural network model

First measurement indicator

L1-RSRP #1
...
L1-RSRP #M

Input layer

Timing advance value

Output layer

Hidden layer

FIG. 11

Neural network model

Timing advance value

First measurement indicator

Receive timing difference #1

...

Receive timing difference #N

Input layer

Output layer

FIG. 12 Hidden layer

EP 4 750 190 A1

Neural network model

First measurement
indicator

Channel impulse
response #1
...
Channel impulse
response #P

Input layer

Timing
advance value

Output layer

**FIG. 13** Hidden layer

FIG. 14

**FIG. 15**

**FIG. 16**

**FIG. 17**

| R | UL/Joint TCI State ID | | |
|---|---|---|---|
| R | R | TAG ID | TA command |
| TA command | | | |

**FIG. 18**

| R | UL/Joint TCI State ID | | |
|---|---|---|---|
| R | R | TAG ID | TA command |
| TA command | | | |

...

| R | UL/Joint TCI State ID | | |
|---|---|---|---|
| R | R | TAG ID | TA command |
| TA command | | | |

**FIG. 19**

Communication device 2000

First processing unit 2010

First sending unit 2020

First receiving unit 2030

**FIG. 20**

Communication device 2100

Second receiving unit 2110

Second processing unit 2120

Second sending unit 2130

**FIG. 21**

Communication device 2200

Third receiving unit 2210

Third sending unit 2220

**FIG. 22**

2300

Communication device

Processor
2310

Memory
2320

Transceiver
2330

**FIG. 23**

2400

Chip

Input interface
2430

Processor
2410

Memory
2420

Output interface
2440

**FIG. 24**

2500

Communication system

Terminal device 2510

Network device 2520

**FIG. 25**

## INTERNATIONAL SEARCH REPORT

| International application No. |
|---|
| **PCT/CN2023/108187** |

### A.    CLASSIFICATION OF SUBJECT MATTER

H04W72/0446(2023.01)i

According to International Patent Classification (IPC) or to both national classification and IPC

### B.    FIELDS SEARCHED

Minimum documentation searched (classification system followed by classification symbols)

IPC：H04W

Documentation searched other than minimum documentation to the extent that such documents are included in the fields searched

Electronic data base consulted during the international search (name of data base and, where practicable, search terms used)

3GPP; VEN; CNTXT; ENTXTC; CNKI: 参考信号, 测量, 定时提前, 计算, 接收功率, 空间滤波器, 滤波器, 确定, 时间差, 时延, 索引, 邻区, 邻小区, 第二小区, TA, csi-rs, measur+, cell, timing advance, RSRP, SSB

### C.    DOCUMENTS CONSIDERED TO BE RELEVANT

| Category* | Citation of document, with indication, where appropriate, of the relevant passages | Relevant to claim No. |
|---|---|---|
| X | CN 111093261 A (ZTE CORP.) 01 May 2020 (2020-05-01) description, paragraphs [0025]-[0235] | 1-48 |
| X | CN 116456361 A (DATANG MOBILE COMMUNICATIONS EQUIPMENT CO., LTD.) 18 July 2023 (2023-07-18) description, paragraphs [0176]-[0617] | 1-48 |
| A | CN 108377577 A (HUAWEI TECHNOLOGIES CO., LTD.) 07 August 2018 (2018-08-07) entire document | 1-48 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 December 2023** | **11 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/108187** |

| Patent document cited in search report | | | Publication date (day/month/year) | Patent family member(s) | Publication date (day/month/year) |
| --- | --- | --- | --- | --- | --- |
| CN | 111093261 | A | 01 May 2020 | None | |
| CN | 116456361 | A | 18 July 2023 | None | |
| CN | 108377577 | A | 07 August 2018 | None | |

Form PCT/ISA/210 (patent family annex) (July 2022)